# EUROPEAN PATENT APPLICATION

(11) **EP 4 491 898 A1**
(43) Date of publication of application: **15.01.2025**
(21) Application number: 23774372.9
(22) Date of filing: 22.02.2023
(51) Int. Cl.: F16D 3/12

(54) **POWER TRANSMISSION JOINT**

(30) Priority: 22.03.2022 JP 2022045962
(71) Applicant: Mitsubishi Heavy Industries, Ltd., Tokyo 100-8332 (JP)
(72) Inventor: YUGE, Atsushi, Tokyo 100-8332 (JP); UCHIDA, Koji, Tokyo 100-8332 (JP); ASANOMA, Toshiaki, Tokyo 100-8332 (JP); KONO, Hiroyuki, Tokyo 100-8332 (JP); KATO, Motoki, Tokyo 100-8332 (JP); SHIMIZU, Takayuki, Tokyo 100-8332 (JP); MIZUNO, Kotoyo, Tokyo 100-8332 (JP); ISHIKAWA, Hiroshi, Tokyo 100-8332 (JP); ISHIHARA, Kenji, Tokyo 100-8332 (JP); KANAZAWA, Hiroyuki, Tokyo 100-8332 (JP); TANIMOTO, Koshi, Tokyo 100-8332 (JP); YANOBU, Yukihide, Tokyo 100-8332 (JP); NAKAKUBO, Masafumi, Tokyo 100-8332 (JP)
(74) Representative: Studio Torta S.p.A.
(86) International application number: PCT/JP2023/006582
(87) International publication number: WO 2023/181773

(57) **Abstract**

A power transmission joint includes: joint members arranged in the axis direction; a plurality of elastic bodies having a plate shape that are provided between the joint members adjacent to each other in the axis direction to connect the joint members adjacent to each other in the axis direction and that are configured to extend in a direction intersecting the axis direction; and a plurality of joining portions provided in a state of being fixed to each joint member and configured to be joined to both end portions of the elastic body, in which the joint members include a motor-side joint configured to be fixed to the drive shaft, a driven shaft-side joint provided on a side opposite to the motor in the axis direction with the motor-side joint interposed therebetween and configured to be fixed to an outer peripheral surface of the driven shaft, and an intermediate body provided between the motor-side joint and the driven shaft-side joint.

## Description

### [Technical Field]

The present disclosure relates to a power transmission joint.

Priority is claimed on Japanese Patent Application No. 2022-045962, filed March 22, 2022, the content of which is incorporated herein by reference.

### [Background Art]

Patent Document 1 discloses a cardan-type bogie for a railway vehicle. In the bogie of Patent Document 1, a main motor shaft of a main motor (motor) and an axle (driven shaft) are connected to each other via a gear joint device and a gear device for deceleration. The torque of the motor is transmitted to the driven shaft via the main motor shaft, the gear joint device, and the gear device.

### [Citation List]

### [Patent Document]

[Patent Document 1]
Japanese Unexamined Patent Application, First Publication No. 2019-27564

### [Summary of Invention]

### [Technical Problem]

However, in the bogie of Patent Document 1, since the torque is transmitted via a plurality of gears, there is a case where the torque of the motor cannot be favorably transmitted to the driven shaft.

The present disclosure has been made to solve the above-described problems, and an object of the present disclosure is to provide a power transmission joint that can favorably transmit a torque of a motor to a driven shaft while favorably absorbing the displacement of the driven shaft.

### [Solution to Problem]

In order to solve the above problems, a power transmission joint according to the present disclosure is a power transmission joint that connects a drive shaft configured to rotate by receiving driving of a motor including a rotor and a driven shaft that is at least partially disposed at a position separated from the drive shaft in an axis direction of the drive shaft, the power transmission joint including: joint members arranged in the axis direction; a plurality of elastic bodies having a plate shape that are provided between the joint members adjacent to each other in the axis direction to connect the joint members adjacent to each other in the axis direction and that are configured to extend in a direction intersecting the axis direction; and a plurality of joining portions provided in a state of being fixed to each joint member and configured to be joined to both end portions of the elastic body, in which the joint members include a motor-side joint configured to be fixed to the drive shaft, a driven shaft-side joint provided on a side opposite to the motor in the axis direction with the motor-side joint interposed therebetween and configured to be fixed to an outer peripheral surface of the driven shaft, and an intermediate body provided between the motor-side joint and the driven shaft-side joint.

### [Advantageous Effects of Invention]

With the power transmission joint of the present disclosure, the torque of the motor can be favorably transmitted to the driven shaft while favorably absorbing the displacement of the driven shaft.

### [Brief Description of Drawings]

FIG. 1 is a schematic view of a bogie according to a first embodiment of the present disclosure as viewed from a traveling direction.
FIG. 2 is a perspective view of a power transmission joint according to a first embodiment of the present disclosure.
FIG. 3 is an exploded perspective view of the power transmission joint according to the first embodiment of the present disclosure.
FIG. 4 is a cross-sectional view of the power transmission joint according to the first embodiment of the present disclosure taken along an axis direction.
FIG. 5 is a view showing torque transmission by the power transmission joint according to the first embodiment of the present disclosure.
FIG. 6 is a view showing absorption of a vertical displacement by the power transmission joint according to the first embodiment of the present disclosure.
FIG. 7 is a view showing absorption of an axial displacement by the power transmission joint according to the first embodiment of the present disclosure.
FIG. 8 is a view showing absorption of an inclination angle by the power transmission joint according to the first embodiment of the present disclosure.
FIG. 9 is a view showing a power transmission joint according to a modification example of the first embodiment of the present disclosure as viewed from a radially outer side.
FIG. 10 is an exploded perspective view of a power transmission joint according to a second embodiment of the present disclosure.
FIG. 11 is a partially exploded perspective view of a power transmission joint according to a third embodiment of the present disclosure.
FIG. 12 is a partially exploded perspective view of a power transmission joint according to a modification example of the third embodiment of the present disclosure.
FIG. 13 is a view showing a power transmission joint according to a fourth embodiment of the present disclosure as viewed from a radially outer side.
FIG. 14 is a perspective view of an elastic body according to the fourth embodiment of the present disclosure.
FIG. 15 is a view showing an elastic body according to a first modification example of the fourth embodiment of the present disclosure as viewed in an axis direction.
FIG. 16 is a view showing an elastic body according to a second modification example of the fourth embodiment of the present disclosure as viewed in an axis direction.
FIG. 17 is a view showing an elastic body according to a fifth embodiment of the present disclosure as viewed in an axis direction.
FIG. 18 is a view showing an elastic body according to a modification example of the fifth embodiment of the present disclosure as viewed in an axis direction.
FIG. 19 is a view showing an elastic body according to a sixth embodiment of the present disclosure as viewed in an axis direction.
FIG. 20 is a view showing an elastic body according to a seventh embodiment of the present disclosure as viewed in an axis direction.
FIG. 21 is a view showing an elastic body according to an eighth embodiment of the present disclosure as viewed in an axis direction.
FIG. 22 is a view showing an elastic body according to a first modification example of the eighth embodiment of the present disclosure as viewed in an axis direction.
FIG. 23 is a view showing an elastic body according to a second modification example of the eighth embodiment of the present disclosure as viewed in an axis direction.
FIG. 24 is a partially omitted perspective view of a power transmission joint according to a ninth embodiment of the present disclosure.
FIG. 25 is a perspective view schematically showing a joining portion of a power transmission joint according to a tenth embodiment of the present disclosure.
FIG. 26 is a view schematically showing the joining portion of the power transmission joint according to the tenth embodiment of the present disclosure.
FIG. 27 is a view schematically showing a joining portion of a power transmission joint according to a first modification example of the tenth embodiment of the present disclosure.
FIG. 28 is a view schematically showing a joining portion between a motor-side joint and an intermediate body of a power transmission joint according to a second modification example of the tenth embodiment of the present disclosure.
FIG. 29 is a view schematically showing a joining portion of a power transmission joint according to an eleventh embodiment of the present disclosure.
FIG. 30 is a view schematically showing the joining portion of the power transmission joint according to the eleventh embodiment of the present disclosure.
FIG. 31 is a view schematically showing a joining portion of a power transmission joint according to a modification example of the eleventh embodiment of the present disclosure.
FIG. 32 is a view schematically showing the joining portion of the power transmission joint according to the modification example of the eleventh embodiment of the present disclosure.
FIG. 33 is an exploded perspective view schematically showing an intermediate body of a power transmission joint according to a twelfth embodiment of the present disclosure.

### [Description of Embodiments]

### <First Embodiment>

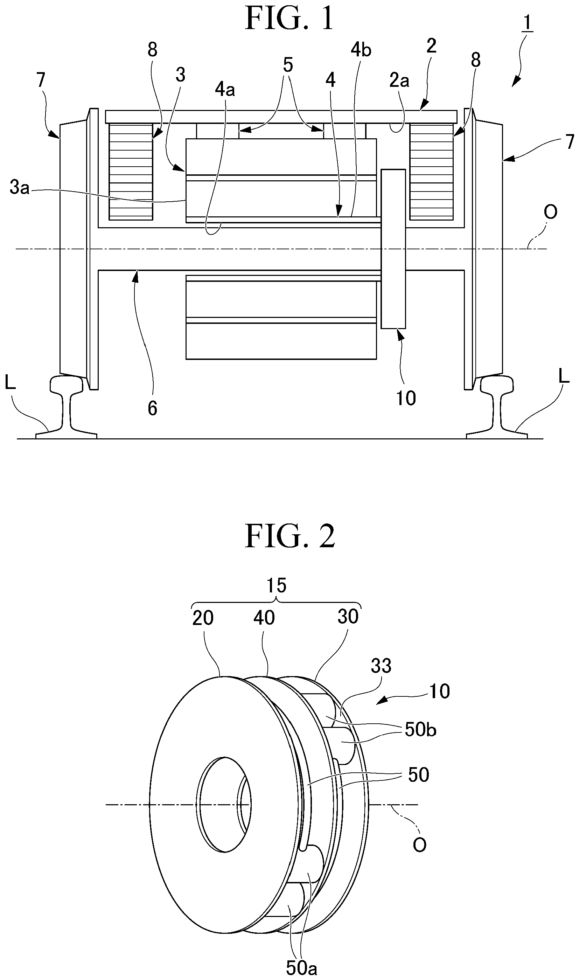

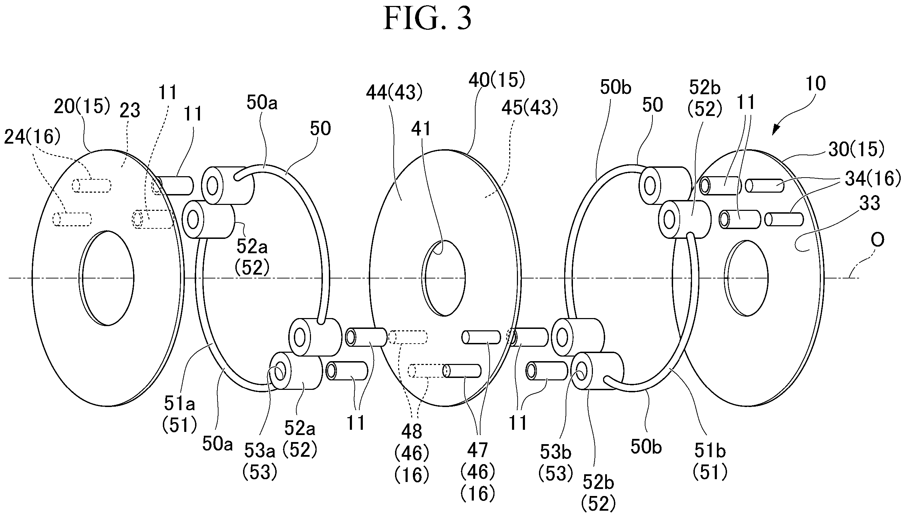

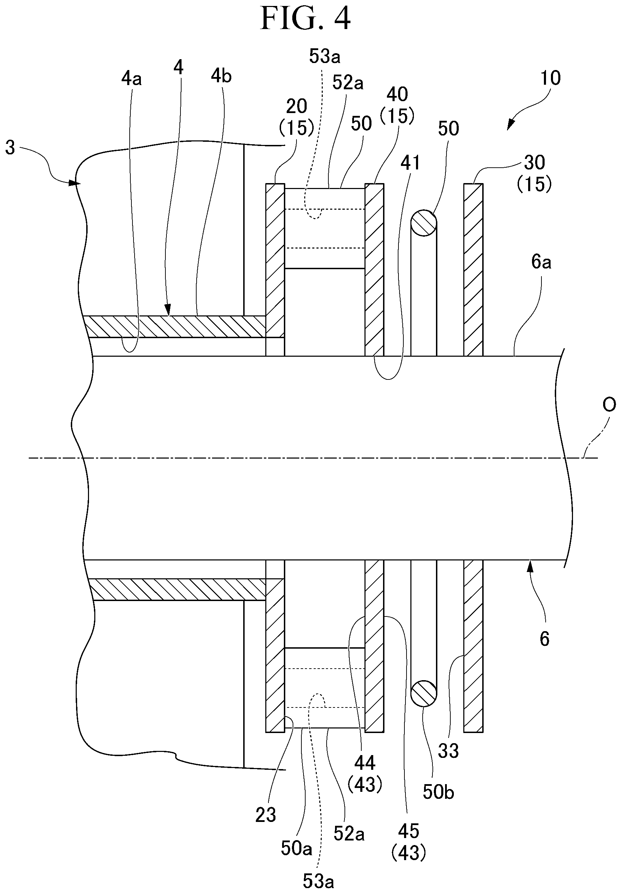

Hereinafter, a power transmission joint 10 according to a first embodiment of the present disclosure will be described with reference to FIGS. 1 to 8.

### (Bogie)

A bogie 1 shown in FIG. 1 is a bogie for a railway vehicle. The bogie 1 includes a bogie frame 2, a motor 3, a drive shaft 4, an axle (driven shaft) 6, a wheel 7, an axle spring 8, and a power transmission joint 10.

### (Bogie Frame)

The bogie frame 2 is spaced upward from a rail L along a ground. A bottom portion 2a of the bogie frame 2 extends in a horizontal direction. The bottom portion 2a of the bogie frame 2 extends in a longitudinal direction of the rail L.

### (Motor)

The motor 3 is a direct drive-type motor. The motor 3 is attached to a lower surface of the bottom portion 2a of the bogie frame 2 via a motor suspension portion 5. The motor 3 includes a rotor 3a.

### (Rotor)

The rotor 3a is formed in a cylindrical shape extending in a horizontal direction and in a direction perpendicular to the longitudinal direction of the rail L.

### (Drive Shaft)

The drive shaft 4 is inserted into the rotor 3a. The drive shaft 4 is a cylindrical hollow shaft formed in a horizontal direction and in a direction perpendicular to the longitudinal direction of the rail L. An outer peripheral surface 4b of the drive shaft 4 is fixed to an inner peripheral surface of the rotor 3a. The drive shaft 4 rotates around an axis O of the drive shaft 4 by receiving the driving of the motor 3. The drive shaft 4 is formed of a metal material.

Hereinafter, the axis O of the drive shaft 4 will be simply referred to as an "axis O", a radial direction of the axis O will be simply referred to as a "radial direction", and a circumferential direction of the axis O will be simply referred to as a "circumferential direction". An axis O direction is perpendicular to the longitudinal direction of the rail L.

One end portion of the drive shaft 4 in the axis O direction is located on an outer side of the rotor 3a in the axis O direction.

### (Axle)

The axle 6 is formed in a circular columnar shape. The axle 6 is formed of a metal material. The axle 6 is inserted into the drive shaft 4. The motor 3 is located at an intermediate portion of the axle 6 in the axis O direction. That is, the axle 6 is disposed coaxially with the drive shaft 4. The axle 6 is disposed at least partially at a position separated from the drive shaft 4 in the axis O direction of the drive shaft 4. In the present embodiment, the intermediate portion of the axle 6 in the axis O direction is disposed at a position overlapping with the drive shaft 4 in the radial direction, and both end portions of the axle 6 in the axis O direction are disposed at positions separated from the drive shaft 4 in the axis O direction.

The axle 6 is disposed to be separated from an inner peripheral surface 4a of the drive shaft 4. A torque around the axis O is transmitted from the motor 3 to the axle 6 via the drive shaft 4 and the power transmission joint 10. The axle 6 rotates around the axis O by the torque of the motor 3. A pair of the wheels 7 facing each other in the axis O direction are provided at both end portions of the axle 6 in the axis O direction. The axle spring 8 is provided between the axle 6 and the bogie frame 2. (A bearing and a bearing box are provided on a lower side (the axle 6 side) of the axle spring 8, but are not shown.)

### (Wheel)

The wheel 7 is disposed at a position separated from the motor 3 in the axis O direction. The wheel 7 is formed in a disk shape. A plate thickness direction of the wheel 7 coincides with the axis O direction. The wheel 7 is connected to an end portion of the axle 6 at a central portion. The wheel 7 is fixed to the axle 6. Each wheel 7 is in contact with the rail L at a lower end portion. The wheel 7 rotationally moves on the rail L by a torque transmitted from the axle 6.

### (Axle Spring)

The axle spring 8 absorbs vibration in a vertical direction. The axle spring 8 is provided at a position close to the wheel 7. The axle spring 8 is a coil spring extending in the vertical direction. An upper end of the axle spring 8 is fixed to the bottom portion 2a of the bogie frame 2. A lower end of the axle spring 8 is connected to the axle 6 via a connection member (not shown). The axle spring 8 is provided such that the torque of the motor 3 is not transmitted from the axle 6 by the connection member. A pair of the axle springs 8 are provided on both outer sides with respect to the motor 3 in the axis O direction. The power transmission joint 10 is provided between one axle spring 8 of the pair of the axle springs 8 and the motor 3.

### (Power Transmission Joint)

The power transmission joint 10 connects the drive shaft 4 and the axle 6 to each other to transmit the torque of the motor 3 to the axle 6. The power transmission joint 10 is provided between the motor 3 and the wheel 7. As shown in FIGS. 2 to 4, the power transmission joint 10 includes a joint member 15, an elastic body 50, and a joining portion 16.

### (Joint Member)

The joint member 15 is provided between the motor 3 and the wheel 7. The joint members 15 are arranged at equal intervals in the axis O direction. The joint member 15 includes a motor-side joint 20, an axle-side joint (driven shaft-side joint) 30, and an intermediate body 40.

### (Motor-side Joint)

The motor-side joint 20 is provided between the motor 3 and the wheel 7. The motor-side joint 20 is fixed to the drive shaft 4 of the motor 3. More specifically, the motor-side joint 20 is provided at an end portion of the drive shaft 4 in the axis O direction and is integrated with the drive shaft 4. The motor-side joint 20 is formed in a flange shape that covers the axle 6 from an outer peripheral side. A plate thickness direction of the motor-side joint 20 intersects the radial direction. In the present embodiment, the plate thickness direction of the motor-side joint 20 is perpendicular to the radial direction. That is, the plate thickness direction of the motor-side joint 20 coincides with the axis O direction. The motor-side joint 20 is formed in a plate shape having a constant plate thickness in the radial direction and the circumferential direction. The motor-side joint 20 is formed of a metal material.

An inner diameter of the motor-side joint 20 is larger than an outer diameter of the axle 6. Therefore, the motor-side joint 20 is movable relative to the axle 6 in the axis O direction and the radial direction. An outer diameter of the motor-side joint 20 is larger than an outer diameter of the drive shaft 4. An axle-side joint 30 is provided between the motor-side joint 20 and the wheel 7.

### (Axle-side Joint)

The axle-side joint 30 is provided on a side opposite to the motor 3 with the motor-side joint 20 interposed therebetween. That is, the axle-side joint 30 faces the motor-side joint 20 in the axis O direction. The axle-side joint 30 is formed in a flange shape that covers the axle 6 from an outer peripheral side. A plate thickness direction of the axle-side joint 30 intersects the radial direction. In the present embodiment, the plate thickness direction of the axle-side joint 30 is perpendicular to the radial direction. That is, the plate thickness direction of the axle-side joint 30 coincides with the axis O direction. The axle-side joint 30 is disposed in parallel to the motor-side joint 20. The axle-side joint 30 is formed in a plate shape having a constant plate thickness in the radial direction and the circumferential direction. The axle-side joint 30 is formed of a metal material.

The axle-side joint 30 is fixed to an outer peripheral surface 6a of the axle 6 by press-fitting. The intermediate body 40 is provided between the axle-side joint 30 and the motor-side joint 20.

### (Intermediate Body)

The intermediate body 40 is formed in a flange shape that covers the axle 6 from an outer peripheral side. A plate thickness direction of the intermediate body 40 intersects the radial direction. In the present embodiment, the plate thickness direction of the intermediate body 40 is perpendicular to the radial direction. That is, the plate thickness direction of the intermediate body 40 coincides with the axis O direction. The intermediate body 40 is formed in a plate shape having a constant plate thickness in the radial direction and the circumferential direction. The intermediate body 40 is formed of a metal material.

An inner diameter of the intermediate body 40 is substantially equal to the outer diameter of the axle 6. However, there is a slight gap between an inner peripheral surface 41 of the intermediate body 40 and the outer peripheral surface 6a of the axle 6. Therefore, the intermediate body 40 is not fixed to the axle 6 and is movable relative to the axle 6 in the axis O direction and the radial direction.

A pair of side surfaces 43 of the intermediate body 40, which face the axis O direction, are each provided with an intermediate body joining portion 46. Hereinafter, of the pair of side surfaces 43, the side surface 43 facing the motor 3 side in the axis O direction is referred to as a "first side surface 44", and the side surface 43 facing the wheel 7 side in the axis O direction is referred to as a "second side surface 45".

### (Elastic Body)

A plurality of the elastic bodies 50 are provided between the joint members 15 adjacent to each other in the axis O direction. The elastic body 50 connects the joint members 15 arranged in the axis O direction to each other. In the present embodiment, the elastic body 50 is abstractly shown. That is, in the drawing, both end portions of the elastic body 50 are shown as cylindrical members, and both end portions of the elastic body 50 are connected at a thick line. Details of features such as the shape and the material of the elastic body 50 will be described in writing.

The elastic body 50 is formed in a plate shape extending in a direction intersecting the axis O direction. In the present embodiment, the elastic body 50 is formed to be curved as viewed from the axis O direction. More specifically, the elastic body 50 is formed in an arc shape extending in the circumferential direction as viewed from the axis O direction.

The elastic body 50 is a so-called leaf spring formed of a metal material. The elastic body 50 may be formed of a composite material such as carbon fiber reinforced plastics (CFRP).

A plate thickness direction of the elastic body 50 intersects the axis O direction.

A plurality of the elastic bodies 50 are provided at positions that are symmetrical with respect to the axis O direction between the joint members 15 adjacent to each other in the axis O direction. In the present embodiment, a pair of the elastic bodies 50 are provided to face each other in the radial direction. The pair of elastic bodies 50 are disposed symmetrically with respect to the axis O. This pair of elastic bodies 50 are provided on the same imaginary arc centered on the axis O.

The elastic bodies 50 adjacent to each other in the axis O direction are disposed by being rotated about the axis O such that phases thereof are different from each other. In the present embodiment, the elastic bodies 50 adjacent to each other in the axis O direction are disposed by being rotated in a range of 85 degrees or more and 95 degrees or less about the axis O such that the phases thereof are different from each other. More specifically, the elastic bodies 50 adjacent to each other in the axis O direction are disposed by being rotated by 90 degrees with respect to each other about the axis O.

Each elastic body 50 includes an elastic main body portion 51 and a joining end 52.

The elastic main body portion 51 is a portion other than both end portions of the elastic body 50. In the present embodiment, a plate thickness of the elastic main body portion 51 is constant in the axis O direction and the circumferential direction.

The joining end 52 is both end portions of the elastic body 50. In the present embodiment, the joining end 52 is formed to be thicker than the elastic main body portion 51. The joining end 52 is formed to be curved in an arc shape as viewed from the axis O direction. A joining hole 53 penetrating the joining end 52 in the axis O direction is formed in the joining end 52.

In addition, the plurality of elastic bodies 50 include a motor-side elastic body 50a and an axle-side elastic body 50b.

### (Motor-side Elastic Body)

The motor-side elastic body 50a is provided between the intermediate body 40 and the motor-side joint 20. The motor-side elastic body 50a connects the motor-side joint 20 and the intermediate body 40.

Hereinafter, the elastic main body portion 51 of the motor-side elastic body 50a may be referred to as a "motor-side elastic main body portion 51a", the joining end 52 of the motor-side elastic body 50a may be referred to as a "motor-side joining end 52a", and the joining hole 53 of the motor-side elastic body 50a may be referred to as a "motor-side joining hole 53a".

### (Axle-side Elastic Body)

The axle-side elastic body 50b is provided between the axle-side joint 30 and the intermediate body 40. The axle-side elastic body 50b connects the axle-side joint 30 and the intermediate body 40.

Hereinafter, the elastic main body portion 51 of the axle-side elastic body 50b may be referred to as an "axle-side elastic main body portion 51b", the joining end 52 of the axle-side elastic body 50b may be referred to as an "axle-side joining end 52b", and the joining hole 53 of the axle-side elastic body 50b may be referred to as an "axle-side joining hole 53b".

### (Joining Portion)

The joining portion 16 is provided in a state of being fixed to each of the joint members 15. That is, the joining portion 16 is provided in each of the motor-side joint 20, the axle-side joint 30, and the intermediate body 40. In the present embodiment, a plurality of the joint members 15 are provided in each of the joining portions 16.

In the present embodiment, the joining portion 16 is a pin having a circular columnar shape that protrudes from the joint member 15 in the axis O direction. The joining portion 16 is integrated with the joint member 15 by, for example, welding. In the present embodiment, the pin having a circular columnar shape is shown as the joining portion 16, but the shape of the joining portion 16 is not limited to the pin shape as long as the shape allows the leaf spring and the intermediate body to be connected to each other. The shape of the joining portion 16 may be, for example, a block shape (square column) or the like.

The joining portion 16 is joined to both end portions of the elastic body 50. That is, the joining portion 16 is joined to the joining end 52 of the elastic body 50. The joining portion 16 is inserted into the joining hole 53 of the joining end 52 via a rubber bush 11. In the present embodiment, by appropriately selecting the material and dimensions of the rubber bush 11, both end portions of the elastic body 50 are semi-rigidly joined to the joining portion 16. The semi-rigidly joined refers to a joined state in which the elastic body 50 is rotatable about the joining portion 16 while receiving a large resistance.

In addition, a plurality of the joining portions 16 include a motor-side joining portion 24, an axle-side joining portion (driven shaft-side joining portion) 34, and an intermediate body joining portion 46.

### (Motor-side Joining Portion)

The motor-side joining portion 24 is provided in the motor-side joint 20. More specifically, the motor-side joining portion 24 is provided on a side surface 23 of the motor-side joint 20, which faces a side opposite to the motor 3 in the axis O direction.

The motor-side joining portions 24 are provided in a pair of sets with the same phase to be adjacent to each other in the circumferential direction. In other words, two motor-side joining portions 24 are provided on the same imaginary arc centered on the axis O and at positions close to each other in the circumferential direction.

Here, the "phase" means a "circumferential phase", and the "circumferential phase" means a "circumferential position".

In addition, the fact that "A and B are close to each other in the circumferential direction" means, for example, a case where, with a central axis or a center point such as the axis O simply as a "center", an angle between a half-line connecting the center and A and a half-line connecting the center and B is, for example, 5 degrees or more and 45 degrees or less.

In addition, in the following, the "angle formed by a half-line connecting the center and A and a half-line connecting the center and B" may be simply referred to as a "central angle of A and B".

The motor-side joining portion 24 is formed of the same metal material as that of the motor-side joint 20.

The motor-side joining portion 24 is inserted into the motor-side joining hole 53a of a first motor-side joining end 52a of two motor-side joining ends 52a of the motor-side elastic body 50a. The motor-side joining portion 24 is joined to the first motor-side joining end 52a.

### (Axle-side Joining Portion)

The axle-side joining portion 34 is provided in the axle-side joint 30. More specifically, the axle-side joining portion 34 is provided on a side surface 33 of the axle-side joint 30, which faces a side opposite to the wheel 7 in the axis O direction.

The axle-side joining portions 34 are provided in a pair of sets with the same phase to be adjacent to each other in the circumferential direction. In other words, two axle-side joining portions 34 are provided on the same imaginary arc centered on the axis O and at positions close to each other in the circumferential direction. The radius of the imaginary arc passing through the two axle-side joining portions 34 is equal to the radius of the imaginary arc passing through the two motor-side joining portions 24. The central angle of the two axle-side joining portions 34 is equal to the central angle of the two motor-side joining portions 24.

The axle-side joining portion 34 is formed of the same metal material as that of the axle-side joint 30.
The axle-side joining portion 34 is inserted into the axle-side joining hole 53b of a first axle-side joining end 52b of two axle-side joining ends 52b of the axle-side elastic body 50b. The axle-side joining portion 34 is joined to the first axle-side joining end 52b.

The axle-side joint 30 is disposed with respect to the motor-side joint 20 such that the axle-side joining portion 34 and the motor-side joining portion 24 have different phases in the circumferential direction. In the present embodiment, a phase difference between the two axle-side joining portions 34 and the two motor-side joining portions 24 as a whole is 90 degrees.

Here, the "phase difference" is represented by an angle in the circumferential direction about the axis O. The same applies to the following "phase difference".

### (Intermediate Body Joining Portion)

A plurality of the intermediate body joining portions 46 are provided in the intermediate body 40. The plurality of intermediate body joining portions 46 include a first intermediate body joining portion 47 on the motor 3 side and a second intermediate body joining portion 48 on the wheel 7 side.

### (First Intermediate Body Joining Portion)

The first intermediate body joining portion 47 is provided on the first side surface 44.

The first intermediate body joining portions 47 are provided in a pair of sets with the same phase to be adjacent to each other in the circumferential direction. In other words, two first intermediate body joining portions 47 are provided on the same imaginary arc centered on the axis O and at positions close to each other in the circumferential direction. The radius of the imaginary arc passing through the two first intermediate body joining portions 47 is equal to the radius of the imaginary arc passing through the two motor-side joining portions 24 and the radius of the imaginary arc passing through the two axle-side joining portions 34. The central angle of the two first intermediate body joining portions 47 is equal to the central angle of the two motor-side joining portions 24 and the central angle of the two axle-side joining portions 34.

The first intermediate body joining portion 47 is formed of the same metal material as that of the intermediate body 40.

The first intermediate body joining portion 47 is inserted into the motor-side joining hole 53a of the second motor-side joining end 52a of the two motor-side joining ends 52a of the motor-side elastic body 50a, which is not joined to the motor-side joining portion 24. The first intermediate body joining portion 47 is joined to the second motor-side joining end 52a.

### (Second Intermediate Body Joining Portion)

The second intermediate body joining portion 48 is provided on the second side surface 45.

The second intermediate body joining portions 48 are provided in a pair of sets with the same phase to be adjacent to each other in the circumferential direction. In other words, two second intermediate body joining portions 48 are provided on the same imaginary arc centered on the axis O and at positions close to each other in the circumferential direction. The radius of the imaginary arc passing through the two second intermediate body joining portions 48 is equal to the radius of the imaginary arc passing through the two first intermediate body joining portions 47. The central angle of the two second intermediate body joining portions 48 is equal to the central angle of the two first intermediate body joining portions 47.

The two second intermediate body joining portions 48 are provided to have a phase in the circumferential direction shifted from the two first intermediate body joining portions 47. In the present embodiment, a phase difference between the two second intermediate body joining portions 48 and the two first intermediate body joining portions 47 as a whole is 90 degrees.

The second intermediate body joining portion 48 is formed of the same metal material as that of the intermediate body 40.

The second intermediate body joining portion 48 is inserted into the axle-side joining hole 53b of the second axle-side joining end 52b of the two axle-side joining ends 52b of the axle-side elastic body 50b, which is not joined to the axle-side joining portion 34. The second intermediate body joining portion 48 is joined to the second axle-side joining end 52b.

The intermediate body 40 is disposed staggered relative to the motor-side joint 20 such that the motor-side joining portion 24 and the first intermediate body joining portion 47 have different phases in the circumferential direction. In the present embodiment, a phase difference between the two first intermediate body joining portions 47 and the two motor-side joining portions 24 as a whole is 180 degrees.

In addition, the intermediate body 40 is disposed staggered relative to the axle-side joint 30 such that the axle-side joining portion 34 and the second intermediate body joining portion 48 have different phases in the circumferential direction. In the present embodiment, a phase difference between the two second intermediate body joining portions 48 and the two axle-side joining portions 34 as a whole is 180 degrees.

By disposing the intermediate body 40 as described above, the motor-side joining portion 24, the axle-side joining portion 34, the first intermediate body joining portion 47, and the second intermediate body joining portion 48 are disposed at positions shifted by 90 degrees about the axis O as viewed from the axis O direction. As a result, as described above, the elastic bodies 50 adjacent to each other in the axis O direction are disposed by being rotated by 90 degrees with respect to each other about the axis O. That is, the motor-side elastic body 50a and the axle-side elastic body 50b are disposed to have different phases in the circumferential direction, and a phase difference between the pair of motor-side elastic bodies 50a and the pair of axle-side elastic bodies 50b as a whole is 90 degrees. As a result, at least one of the motor-side elastic body 50a or the axle-side elastic body 50b is disposed at the entire circumferential position of the power transmission joint 10.

### (Operation and Effect)

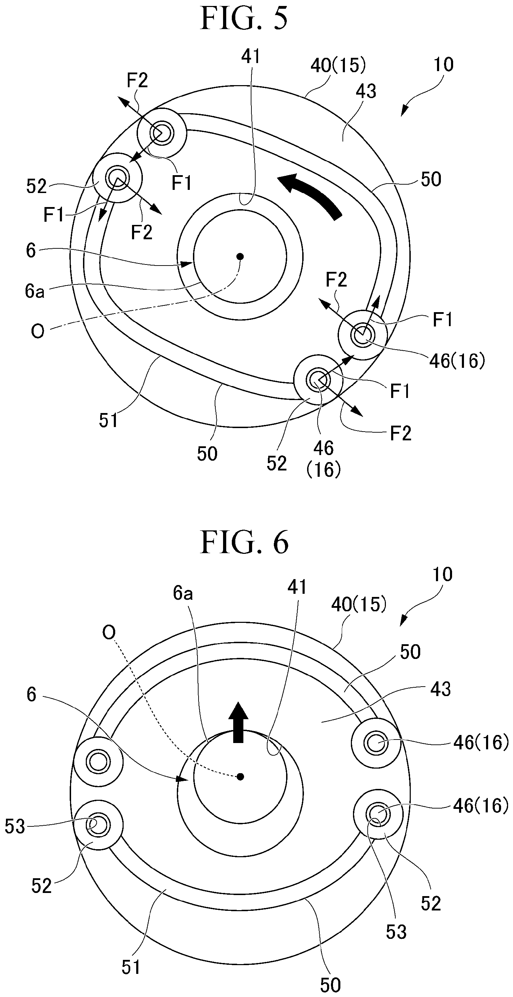

Hereinafter, an operation of the power transmission joint 10 will be described with reference to FIGS. 5 to 8. FIGS. 5 to 8 schematically show the elastic body 50 and the intermediate body 40 as viewed from the axis O direction. In FIGS. 5 and 6, the distance between the inner peripheral surface 41 of the intermediate body 40 and the outer peripheral surface 6a of the axle 6 is shown to be larger than the actual distance.

First, torque transmission by the power transmission joint 10 will be described with reference to FIG. 5 and the like. In FIG. 5, the rotation direction of the axle 6 is indicated by an arrow.

In a case where the motor 3 is driven, first, the torque of the motor 3 is transmitted to the motor-side joint 20 of the power transmission joint 10. As a result, the motor-side joint 20 rotates around the axis O. In a case where the motor-side joint 20 rotates, the motor-side elastic body 50a rotates around the axis O.

In a case where the motor-side elastic body 50a rotates, a force is applied from the motor-side elastic body 50a to the first intermediate body joining portion 47 of the intermediate body 40. A circumferential force F1 acts on each first intermediate body joining portion 47. In addition, a couple of forces F2 in opposite directions act on the pair of first intermediate body joining portions 47. The torque is transmitted from the motor-side joint 20 to the intermediate body 40 by the circumferential force F1 and the couple of forces F2. In this way, the torque is transmitted from the motor-side joint 20 to the intermediate body 40 via the motor-side elastic body 50a. In the torque transmission to the intermediate body 40, the couple of forces F2 are dominant over the circumferential force F1.

At this time, the motor-side elastic body 50a is bent and deformed along the first side surface 44 of the intermediate body 40. The pair of motor-side elastic bodies 50a are deformed into a shape symmetrical with respect to the axis O.

In a case where the torque is transmitted to the intermediate body 40, the intermediate body 40 rotates around the axis O. In a case where the intermediate body 40 rotates, the axle-side elastic body 50b rotates around the axis O.

In a case where the axle-side elastic body 50b rotates, a force is applied from the axle-side elastic body 50b to the axle-side joining portion 34 of the axle-side joint 30. A circumferential force F1 acts on each axle-side joining portion 34. In addition, a couple of forces F2 in opposite directions act on the pair of axle-side joining portions 34 facing each other in the circumferential direction. The torque is transmitted from the intermediate body 40 to the axle-side joint 30 by the circumferential force F1 and the couple of forces F2. In this way, the torque is transmitted from the intermediate body 40 to the axle-side joint 30 via the axle-side elastic body 50b. In the torque transmission to the axle-side joint 30, the couple of forces F2 are dominant over the circumferential force F1.

At this time, the axle-side elastic body 50b is bent and deformed along the second side surface 45 of the intermediate body 40. The pair of axle-side elastic bodies 50b are deformed into a shape symmetrical with respect to the axis O.

In a case where the torque is transmitted, the axle-side joint 30 rotates around the axis O. In addition, the axle-side joint 30 is fixed to the outer peripheral surface 6a of the axle 6. Therefore, in a case where the axle-side joint 30 rotates, the torque is transmitted from the axle-side joint 30 to the axle 6, and the axle 6 rotates around the axis O.

In this way, the torque of the motor 3 is transmitted to the axle 6 via the power transmission joint 10.

Next, displacement absorption and inclination angle absorption by the power transmission joint 10 will be described with reference to FIGS. 6 to 8.

For example, there may be a case where the axle 6 displaces in the vertical direction (radial direction) as shown in FIG. 6 due to a weight of the wheel 7 or the bogie 1, the vibration, or the like. In FIG. 6, a direction of the displacement in the vertical direction (radial direction) is indicated by an arrow. In this case, the elastic body 50 elastically deforms along the side surface 43 of the intermediate body 40 (in-plane deformation). As a result, an elastic force acts in a direction opposite to a displacement direction. The displacement in the vertical direction is suppressed by this elastic force. In this way, the displacement of the axle 6 in the vertical direction is absorbed.

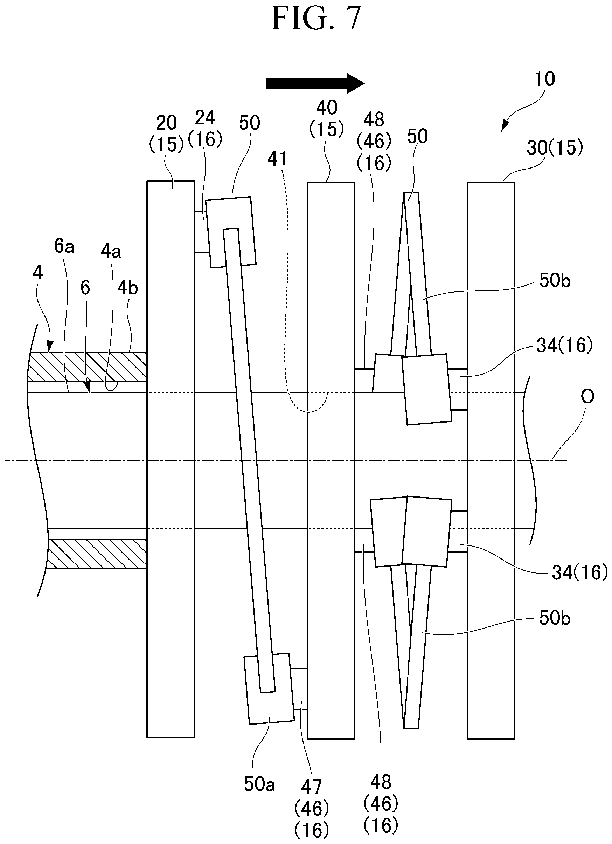

In addition, for example, there may be a case where the axle 6 displaces in the axis O direction as shown in FIG. 7 due to the weight of the wheel 7 or the bogie 1, the vibration, or the like. In FIG. 7, a direction of the displacement in the axis O direction is indicated by an arrow. In this case, the elastic body 50 elastically deforms in the axis O direction (out-of-plane deformation). As a result, an elastic force acts in a direction opposite to a displacement direction. The displacement in the axis O direction is suppressed by this elastic force. In this way, the displacement of the axle 6 in the axis O direction is absorbed.

In addition, in FIG. 7, an inclination of the intermediate body 40 in the axis O direction is omitted, but the displacement in the axis O direction is also absorbed by the intermediate body 40 itself being inclined in the axis O direction.

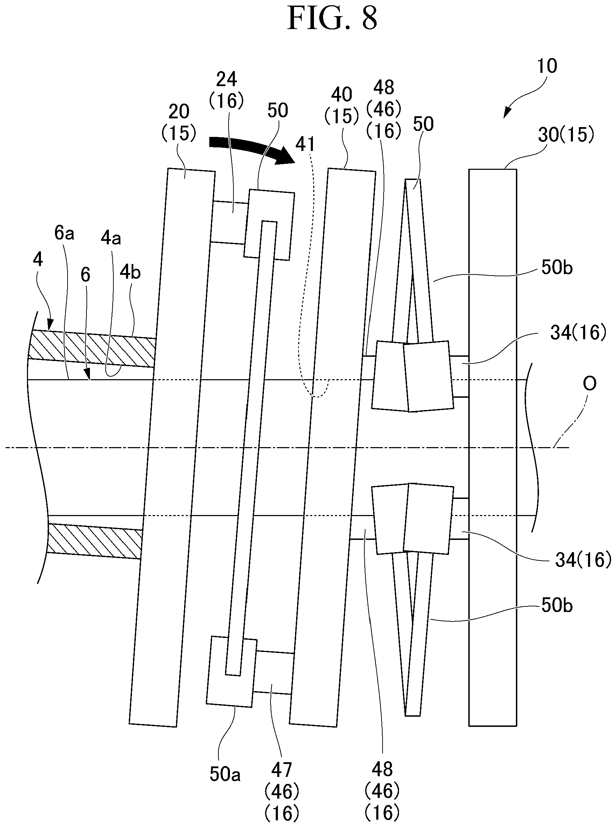

In addition, for example, there may be a case where due to the weight of the wheel 7 or the bogie 1, the vibration, or the like, the motor-side joint 20 is inclined with respect to the axle-side joint 30 as shown in FIG. 8 and an inclination angle may be formed between a rotation axis of the motor-side joint 20 and a rotation axis of the axle-side joint 30. In FIG. 8, a direction of the inclination angle of the motor-side joint 20 is indicated by an arrow. In this case, the intermediate body 40 and the elastic body 50 are inclined in the same manner as the motor-side joint 20, and the elastic body 50 elastically deforms in the axis O direction (out-of-plane deformation). As a result, the elastic force acts in a direction opposite to the inclination of the motor-side joint 20. The inclination of the motor-side joint 20 is suppressed by this elastic force. In this way, the inclination angle between the motor-side joint 20 and the axle-side joint 30 is absorbed.

In the present embodiment, the power transmission joint 10 includes the joint members 15 arranged in the axis O direction, the plurality of elastic members 50 having a plate shape that are provided between the joint members 15 adjacent to each other in the axis O direction to connect the joint members 15 adjacent to each other in the axis O direction and that extend in a direction intersecting the axis O direction, and the plurality of the joining portions 16 that are provided in a state of being fixed to each joint member 15 and that are joined to both end portions of the elastic body 50. The joint member 15 includes the motor-side joint 20 that is fixed to the drive shaft 4, the axle-side joint 30 that is provided on a side opposite to the motor 3 in the axis O direction with the motor-side joint 20 interposed therebetween and that is fixed to the outer peripheral surface 6a of the axle 6, and the intermediate body 40 that is provided between the motor-side joint 20 and the axle-side joint 30.

According to the present embodiment, the intermediate body 40 is disposed between the elastic bodies 50. Therefore, the plurality of elastic bodies 50 can be arranged in series in the axis O direction. As a result, the power transmission joint 10 can extend the elastic body 50 in the axis O direction and reduce the rigidity in the axis O direction while being subjected to radial dimension constraints.

In addition, since the plurality of elastic bodies 50 are arranged in series in the axis O direction, each elastic body 50 can be set to any shape. That is, the power transmission joint 10 having a low rigidity can be realized by arranging the elastic bodies 50 in series while the elastic body 50 has a shape that can resist the torque. Further, the power transmission joint 10 can also exhibit a so-called vibration damping function by causing frictional attenuation by the plurality of elastic bodies 50 arranged in series.

Further, according to the present embodiment, the plate thickness direction of the elastic body 50 intersects the axis O direction. As a result, the elastic body 50 is easily deformed in a direction intersecting the axis O direction. Therefore, the rigidity in the radial direction can be reduced in addition to the rigidity in the axis O direction.

As described above, since the rigidity of the elastic body 50 can be reduced, the power transmission joint 10 can favorably absorb the displacement of the axle 6.

In addition, according to the present embodiment, the power transmission joint 10 includes the joint member 15, the elastic body 50, and the joining portion 16. As a result, the power transmission joint 10 can suppress attenuation of the torque in a process in which the torque of the motor 3 is transmitted to the axle 6.

Therefore, the power transmission joint 10 can favorably transmit the torque of the motor 3 to the axle 6 while favorably absorbing the displacement of the axle 6. Therefore, even in a case where the displacement of the axle 6 is large, the large displacement of the axle 6 can be sufficiently and favorably absorbed.

In addition, according to the present embodiment, even in a case where a rotation speed of the motor 3 is relatively high, the power transmission joint 10 can sufficiently and favorably transmit the high-speed rotation of the motor 3 to the axle 6. Further, the power transmission joint 10 can be made into a compact mechanism.

As described above, the power transmission joint 10 can transmit the large torque and the high-speed rotation of the motor 3 to the axle 6 while absorbing the large displacement of the axle 6 with a more compact mechanism than the related art.

In addition, the power transmission joint 10 can achieve the absorption of the large displacement and the transmission of the large torque and the high-speed rotation of the motor 3. Therefore, a so-called direct drive mechanism can be configured.

In addition, in the present embodiment, since the motor 3 is supported on the bogie frame 2 by the motor suspension portion 5, all of a motor/gear weight ratio, an unsprung weight ratio, and a bogie 1 frame weight ratio can be reduced as compared with the related art.

In the present embodiment, both end portions of the elastic body 50 are semi-rigidly joined to the joining portion 16.

The rigidity of the elastic body 50 is evaluated as a rigidity of a series spring of the elastic body 50 alone and the joining portion 16, rather than the rigidity of the elastic body 50 alone. According to the present embodiment, by making the joining portion 16 undergo semi-rigid joining which is flexible as compared with rigid joining, the elastic body 50 and the joining portion 16 are softer than the elastic body 50 alone as the series spring. As a result, the elastic body 50 can be more efficiently deformed in response to a forced displacement.

Only one of both end portions of the elastic body 50 may be semi-rigidly joined to the joining portion 16. Even in this case, the same operation and effect as in a case where both end portions of the elastic body 50 are semi-rigidly joined to the joining portion 16 can be exhibited.

In addition, at least one of both end portions of the elastic body 50 may be joined to be rotatable around an axis (not shown; hereinafter, this axis will be referred to as a second axis) that passes through the joining portion and is parallel to the axis. The "joining to be rotatable around the second axis" means joining in which a resistance received by the elastic body 50 from the joining portion 16 in a case where the elastic body 50 rotates around the second axis is negligibly small as compared with the semi-rigid joining. Since the "joining to be rotatable around the second axis" is flexible joining as compared with the rigid joining of the joining portion 16, the elastic body 50 and the joining portion 16 are softer than the elastic body 50 alone as the series spring. As a result, the elastic body 50 can be more efficiently deformed in response to a forced displacement.

In the present embodiment, the elastic bodies 50 adjacent to each other in the axis O direction are disposed to have different phases by being rotated about the axis O.

According to the present embodiment, it is possible to suppress variation of the rigidity depending on a rotational position with respect to the rigidity against the displacement in a direction perpendicular to the axis direction of the power transmission joint 10 (in-plane displacement).

In the present embodiment, the elastic bodies 50 adjacent to each other in the axis O direction are disposed by being rotated in a range of 85 degrees or more and 95 degrees or less about the axis O such that the phases thereof are different from each other. As in the present embodiment, the phase difference between the elastic bodies 50 adjacent to each other in the axis O direction is preferably 90 degrees.

According to the present embodiment, the rigidity against the displacement in the direction perpendicular to the axis O direction of the power transmission joint 10 (in-plane displacement) is the same regardless of the rotational position. Therefore, since a reactive force of the power transmission joint 10 does not change depending on the rotational position, the power transmission joint 10 can suppress input of a periodic stress to a device (the motor 3 or the like) connected to the power transmission joint 10.

In addition, since the reactive force of the power transmission joint 10 does not change depending on the rotational position, the vibration damping function of the power transmission joint 10 can be improved.

In the present embodiment, the elastic body 50 is formed to be curved as viewed from the axis O direction.

According to the present embodiment, the couple of forces F2 generated at both ends of the elastic body 50 by the torque of the motor 3 is transmitted by bending of the elastic body 50. Therefore, the power transmission joint 10 can reduce the risk of occurrence of buckling of the elastic body 50, which is a concern in a case where the couple of forces F2 are transmitted by an axial force. Further, a length of the elastic body 50 is longer than that in a case where the elastic body 50 is formed in a linear shape. Therefore, the power transmission joint 10 can reduce the rigidity of the elastic body 50.

In the present embodiment, the elastic body 50 is formed in an arc shape extending in a circumferential direction of the axis O.

According to the present embodiment, a curvature is equal at each point of the elastic body 50. Therefore, the power transmission joint 10 can further reduce the risk of occurrence of buckling of the elastic body 50. As a result, it is possible to extend the life of the power transmission joint 10.

In the present embodiment, the motor-side joining portion 24 is provided in a pair of sets with the same phase to be adjacent to each other in the circumferential direction. Further, the axle-side joining portions 34 are provided in a pair of sets with the same phase to be adjacent to each other in the circumferential direction. Further, the first intermediate body joining portions 47 are provided in a pair of sets with the same phase to be adjacent to each other in the circumferential direction. Further, the second intermediate body joining portions 48 are provided in a pair of sets with the same phase to be adjacent to each other in the circumferential direction.

According to the present embodiment, in a case where a force in the axis O direction acts on the power transmission joint 10, the intermediate body 40 is rigidly tilted. As a result, the rigidity of the power transmission joint 10 as a whole in the axis O direction is reduced. Therefore, the power transmission joint 10 can efficiently absorb the displacement and the inclination in the axis O direction.

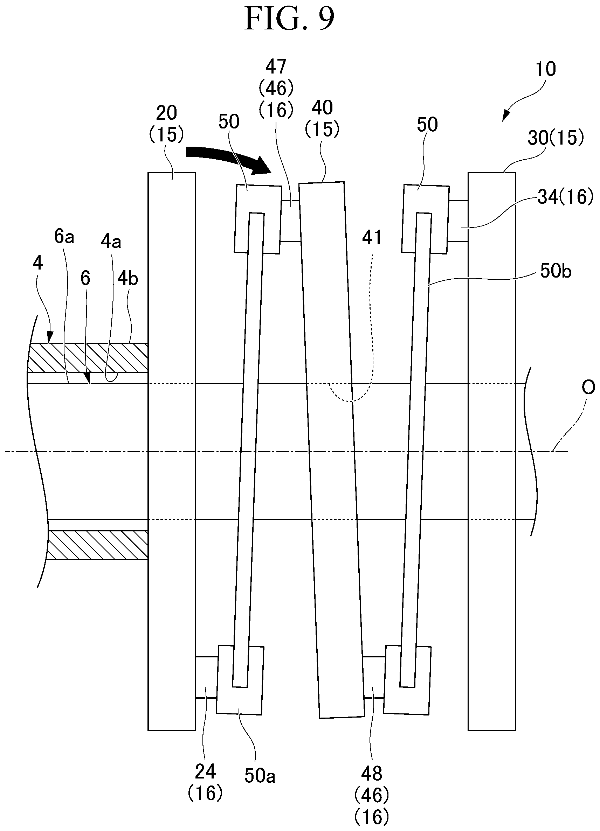

As shown in FIG. 9, the joining portions 16 adjacent to each other in the axis O direction may be provided in opposite phases with a phase difference of 180 degrees on opposite sides in the radial direction about the axis O. More specifically, the motor-side joining portion 24 and the first intermediate body joining portion 47 may be provided in opposite phases with a phase difference of 180 degrees on opposite sides in the radial direction about the axis O, the first intermediate body joining portion 47 and the second intermediate body joining portion 48 may be provided in opposite phases with a phase difference of 180 degrees on opposite sides in the radial direction about the axis O, and the second intermediate body joining portion 48 and the axle-side joining portion 34 may be provided in opposite phases with a phase difference of 180 degrees on opposite sides in the radial direction about the axis O. In this case, the intermediate body 40 is likely to be rigidly inclined in the axis O direction, and the power transmission joint 10 can effectively absorb the displacement and the inclination in the axis O direction.

In the present embodiment, a pair of the elastic bodies 50 are provided to face each other in the radial direction at each stage of a gap between the joint members 15 adjacent to each other in the axis O. As a result, the power transmission joint 10 can favorably transmit the torque of the motor 3 to the axle 6 regardless of the rotational position as compared with a case where only one elastic body 50 is provided at each stage. Therefore, the rotation of the axle 6 can be stabilized.

In the first embodiment, the inner diameter of the intermediate body 40 is substantially equal to the outer diameter of the axle 6, but the present disclosure is not limited to this. The inner diameter of the intermediate body 40 may be as large as that of the motor-side joint 20, and the inner peripheral surface 41 of the intermediate body 40 may be sufficiently spaced from the outer peripheral surface 6a of the axle 6. In this case, an allowable displacement amount of the axle-side elastic body 50b in the radial direction can be secured to be large.

In the first embodiment, a case where the elastic body 50 is formed in an arc shape as viewed from the axis O direction has been described, but the present disclosure is not limited to this. In addition, a case where a pair of the elastic bodies 50 are provided to face each other in the radial direction at each stage of a gap between the joint members 15 adjacent to each other in the axis O direction has been described, but the present disclosure is not limited to this. The shape, the number, and the like of each elastic body 50 can be appropriately changed.

For example, one motor-side elastic body 50a and one axle-side elastic body 50b may be provided. In this case, a torsion equivalent to the torque of the motor 3 is transmitted from the motor 3 to one first intermediate body joining portion 47 via the motor-side elastic body 50a, and the intermediate body 40 rotates. Further, the torsion equivalent to the torque of the motor 3 is transmitted from the intermediate body 40 to one second intermediate body joining portion 48 via the axle-side elastic body 50b, and the axle-side joint 30 rotates.

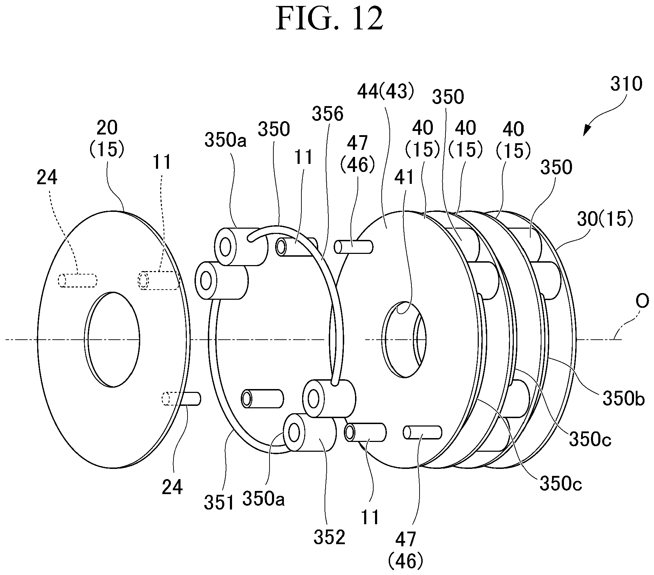

In the first embodiment, the motor-side joining portions 24 are provided in a pair of sets with the same phase to be adjacent to each other in the circumferential direction, the axle-side joining portions 34 are provided in a pair of sets with the same phase to be adjacent to each other in the circumferential direction, the first intermediate body joining portions 47 are provided in a pair of sets with the same phase to be adjacent to each other in the circumferential direction, and the second intermediate body joining portions 48 are provided in a pair of sets with the same phase to be adjacent to each other in the circumferential direction. However, the present disclosure is not limited to this. For example, as in a modification example of a third embodiment described later (see FIG. 12), the motor-side joining portions 24 may be provided in a pair of sets with opposite phases to be separated from each other by 180 degrees in the circumferential direction about the axis O, the axle-side joining portions 34 may be provided in a pair of sets with opposite phases to be separated from each other by 180 degrees in the circumferential direction about the axis O, the first intermediate body joining portions 47 may be provided in a pair of sets with opposite phases to be separated from each other by 180 degrees in the circumferential direction about the axis O, and the second intermediate body joining portions 48 may be provided in a pair of sets with opposite phases to be separated from each other by 180 degrees in the circumferential direction about the axis O.

### <Second Embodiment>

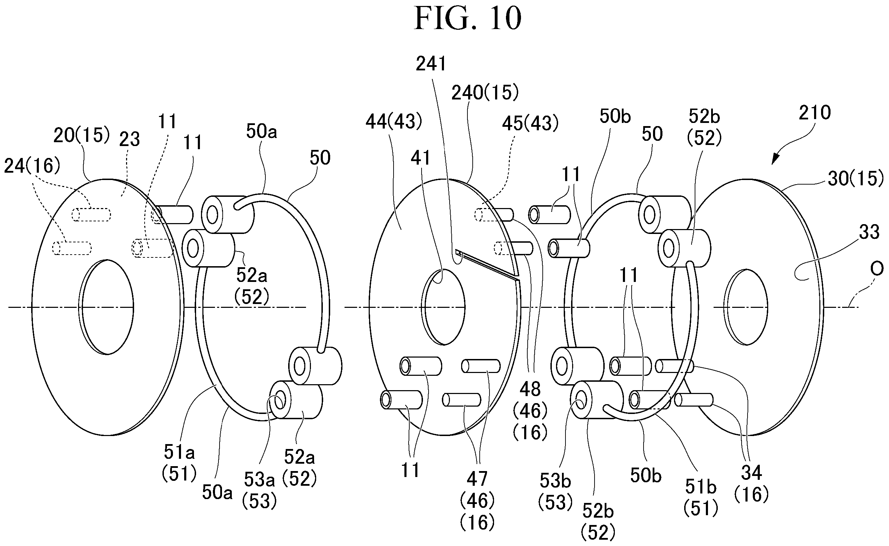

Hereinafter, a power transmission joint 210 according to a second embodiment of the present disclosure will be described with reference to FIG. 10. The same configurations as those in the first embodiment described above are designated by the same names and the same reference signs, and descriptions thereof will be appropriately omitted.

As shown in FIG. 10, a slit 241 is formed in the intermediate body 240. In the present embodiment, the slit 241 is provided on a side opposite to the intermediate body joining portion 46 in the radial direction with respect to the axis O. The slit 241 is formed to extend from an edge of the intermediate body 240 to the inside thereof. The slit 241 is formed in a linear shape as viewed from the axis O direction. The slit 241 penetrates the intermediate body 240 in the axis direction. Any one of the first intermediate body joining portion 47 or the second intermediate body joining portion 48 is provided at a position adjacent to the slit 241 in the radial direction. In the present embodiment, the second intermediate body joining portion 48 is provided adjacent to the slit 241 in the radial direction and is provided on a radially outer side of the slit 241.

In the present embodiment, the slit 241 is formed in the intermediate body 240.

According to the present embodiment, the rigidity of the intermediate body 240 can be reduced. As a result, the intermediate body 240 is easily deformed in the axis O direction. Therefore, the power transmission joint 210 can relax a stress against the forced displacement.

The position, the shape, and the number of the slits 241 are appropriately changed.

In the present embodiment, the elastic body 50 is abstractly shown in the same manner as in the first embodiment.

### <Third Embodiment>

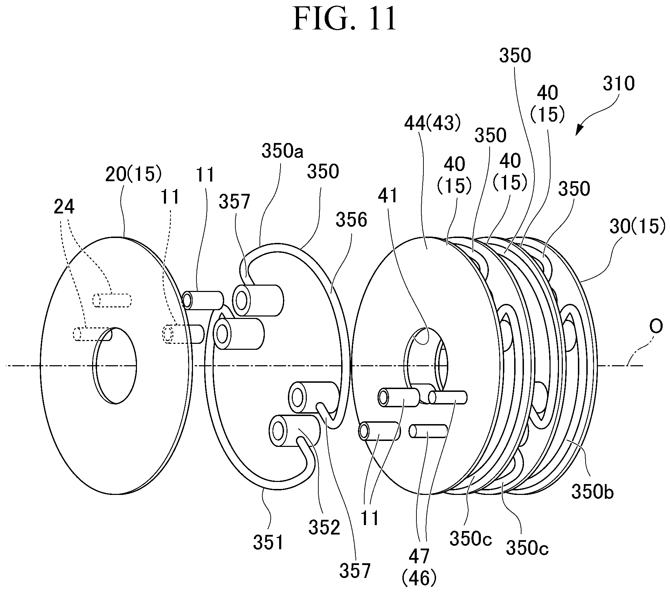

Hereinafter, a power transmission joint 310 according to a third embodiment of the present disclosure will be described with reference to FIG. 11. The same configurations as those in each of the embodiments described above are designated by the same names and the same reference signs, and descriptions thereof will be appropriately omitted.

As shown in FIG. 11, in the power transmission joint 310 according to the present embodiment, three intermediate bodies 40 are provided side by side in the axis O direction.

In the motor-side joint 20, two motor-side joining portions 24 are provided at positions close to each other in the circumferential direction.

In the axle-side joint 30 according to the present embodiment, although not shown, similarly to the motor-side joining portion 24, two axle-side joining portions 34 are provided at positions close to each other in the circumferential direction (the same phase).

In each of the intermediate bodies 40, two first intermediate body joining portions 47 are provided at positions close to each other in the circumferential direction (the same phase). In addition, in each of the intermediate bodies 40, although not shown, similarly to the first intermediate body joining portion 47, two second intermediate body joining portions 48 are provided at positions close to each other in the circumferential direction (the same phase).

The elastic bodies 350 are provided at four stages side by side in the axis O direction. In the present embodiment, the elastic body 350 is abstractly shown in the same manner as in the first embodiment.

The elastic body 350 includes an elastic main body portion 351 and a joining end 352.

The elastic main body portion 351 includes a curved portion 356 and a straight portion 357. The curved portion 356 is formed in an arc shape extending in the circumferential direction as viewed from the axis O direction. The straight portion 357 is provided at both ends of the curved portion 356. A pair of the straight portions 357 extend linearly toward each other along a straight line connecting both ends of the curved portion 356.

The joining end 352 is provided on a side opposite to a joining location with the curved portion 356 in the straight portion 357.

The plurality of elastic bodies 350 include a motor-side elastic body 350a, an axle-side elastic body 350b, and an intermediate elastic body 350c. The intermediate elastic body 350c is provided between the intermediate bodies 40 adjacent to each other in the axis O direction.

The pair of the joining portions 16 having the same position in the axis O direction are provided at positions close to each other in the circumferential direction.

In the present embodiment, three intermediate bodies 40 are provided side by side in the axis O direction, and the elastic bodies 350 are provided at four stages side by side in the axis O direction.

According to the present embodiment, the displacement shared by each elastic body 350 is reduced. As a result, the rigidity of the power transmission joint 310 as a whole is further reduced. That is, the reactive force of the power transmission joint 310 as a whole is reduced. Therefore, the power transmission joint 310 can reduce an influence on a device (the motor or the like) connected to the power transmission joint 310.

In the third embodiment, although three intermediate bodies 40 are provided, and the elastic bodies 350 are provided at four stages, the present disclosure is not limited to this. It is sufficient that two or more intermediate bodies 40 are provided side by side in the axis O direction, and the elastic bodies 350 are provided at three or more stages side by side in the axis O direction.

### <Modification Example of Third Embodiment>

A modification example of the third embodiment will be described with reference to FIG. 12 and the like.

In the motor-side joint 20 according to the present embodiment, two motor-side joining portions 24 are provided on the same imaginary arc centered on the axis O and are separated from each other by 180 degrees in the circumferential direction about the axis O (opposite phases).

In the axle-side joint 30, although not shown, similarly to the motor-side joining portion 24, two axle-side joining portions 34 are provided on the same imaginary arc centered on the axis O and are separated from each other by 180 degrees in the circumferential direction about the axis O (opposite phases).

The phase difference between the two axle-side joining portions 34 and the two motor-side joining portions 24 as a whole is 90 degrees.

In each of the intermediate bodies 40, a pair of the first intermediate body joining portions 47 are provided at positions separated by 180 degrees in the circumferential direction about the axis O (opposite phases). In addition, in each of the intermediate bodies 40, although not shown, similarly to the first intermediate body joining portion 47, a pair of the second intermediate body joining portions 48 are provided at positions separated by 180 degrees about the axis O (opposite phases). In each of the intermediate bodies 40, a phase difference between the first intermediate body joining portion 47 and the second intermediate body joining portion 48 is 90 degrees.

Among the three intermediate bodies 40, the intermediate body 40 closest to the motor 3 in the axis O direction is disposed such that each first intermediate body joining portion 47 is located close to the motor-side joining portion 24 of the motor-side joint 20 in the circumferential direction.

Among the three intermediate bodies 40, the intermediate body 40 located in the middle in the axis O direction is provided to have a phase in the circumferential direction shifted by 90 degrees from the intermediate body 40 closest to the motor 3 in the axis O direction. The second intermediate body joining portion 48 of the intermediate body 40 closest to the motor 3 in the axis O direction and the first intermediate body joining portion 47 of the intermediate body 40 located in the middle in the axis O direction are disposed at positions close to each other in the circumferential direction. In addition, the second intermediate body joining portion 48 of the intermediate body 40 located in the middle in the axis O direction and the first intermediate body joining portion 47 of the intermediate body 40 closest to the wheel 7 in the axis O direction are disposed at positions close to each other in the circumferential direction.

Among the three intermediate bodies 40, the intermediate body 40 closest to the wheel 7 in the axis O direction is provided to have a phase in the circumferential direction shifted by 90 degrees from the intermediate body 40 located in the middle in the axis O direction. In the intermediate body 40 closest to the wheel 7 in the axis O direction, each second intermediate body joining portion 48 is disposed at a position close to the axle-side joining portion 34 of the axle-side joint 30 in the circumferential direction.

In addition, in the present modification example, the elastic main body portion 351 is composed of only the curved portion 356. The plate thickness of the elastic main body portion 351 is gradually reduced from the joining end 52 toward the center in the circumferential direction.

### <Fourth Embodiment>

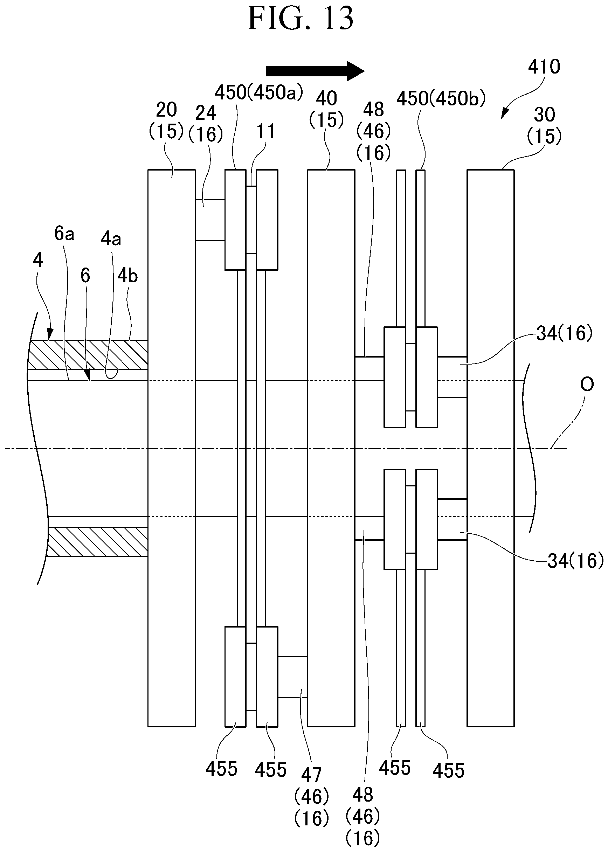

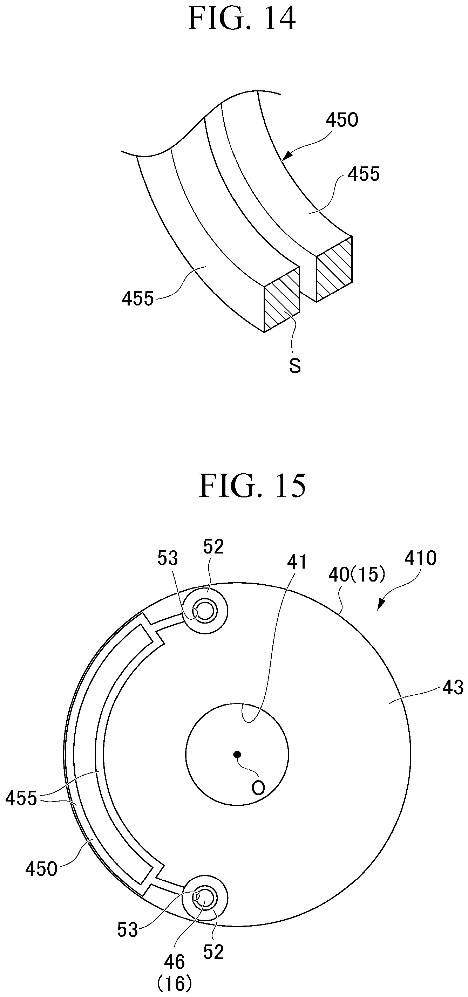

Hereinafter, a power transmission joint 410 according to a fourth embodiment of the present disclosure will be described with reference to FIGS. 13 and 14. The same configurations as those in each of the embodiments described above are designated by the same names and the same reference signs, and descriptions thereof will be appropriately omitted.

As shown in FIGS. 13 and 14, the elastic body 450 has a plurality of beam portions 455 that are disposed in parallel to each other at intervals. In the present embodiment, the elastic body 450 is abstractly shown in the same manner as in the first embodiment. Note that, in FIG. 14, each ridge line of the elastic body 450 is shown.

In the present embodiment, the plurality of beam portions 455 are arranged in the axis O direction. That is, a pair of the beam portions 455 are provided with a slight gap in the axis O direction. The pair of beam portions 455 are completely separated from each other in the axis O direction.

In the present embodiment, the elastic body 450 has the plurality of beam portions 455 that are disposed in parallel to each other at intervals.

According to the present embodiment, since deformation occurs in each of the beam portions 455, the rigidity of the elastic body 450 is reduced. As a result, the rigidity of the power transmission joint 410 can be reduced.

In the present embodiment, the plurality of beam portions 455 are arranged in the axis O direction.

According to the present embodiment, the rigidity of the elastic body 450 in the axis O direction is reduced. As a result, the rigidity of the power transmission joint 410 in the axis O direction and in a direction inclined with respect to the axis O direction can be reduced. Therefore, various reactive forces acting on the power transmission joint 410 can be reduced with respect to the forced displacement in the axis O direction.

In addition, a dimension of the beam portion 455 in the axis O direction is smaller than a dimension of the elastic body 450 in the axis O direction. Therefore, it is possible to reduce a bending rigidity of each elastic body 450 and to reduce a load in the axis O direction without changing a cross-sectional area of a cross section of the elastic body 450 along the axis O direction and the radial direction (hereinafter, referred to as a torque direction cross section S) and the dimension of the elastic body 450 in the axis O direction.

In the present modification example, only one of the motor-side elastic body 450a and the axle-side elastic body 450b may be divided into a plurality of pieces in the axis O direction among the plurality of elastic bodies 450. In addition, each elastic body does not have to be divided such that dimensions in the axis O direction are all equal to each other.

### <First Modification Example of Fourth Embodiment>

A first modification example of the fourth embodiment will be described with reference to FIG. 15.

As shown in FIG. 15, in the present modification example, one elastic body 450 is provided for one stage of a gap between the joint members 15 adjacent to each other in the axis O direction. For each elastic body 450, the plurality of beam portions 455 are arranged in a direction intersecting the axis O direction. In the present modification example, the pair of beam portions 455 are arranged with a gap in the radial direction. The pair of beam portions 455 are connected to each other near the joining ends 52 on both sides in an extension direction.

In the present modification example, the plurality of beam portions 455 are arranged in a direction intersecting the axis O direction.

According to the present modification example, the rigidity of the elastic body 450 in the direction intersecting the axis O direction is reduced. As a result, the rigidity of the power transmission joint 410 in the direction intersecting the axis O direction can be reduced. Therefore, various reactive forces acting on the power transmission joint 410 can be reduced with respect to the forced displacement in the direction intersecting the axis O direction.

In the present modification example, a pair of the elastic bodies 450 may be provided to face each other in the radial direction for one stage of a gap between the joint members 15 adjacent to each other in the axis O direction.

### <Second Modification Example of Fourth Embodiment>

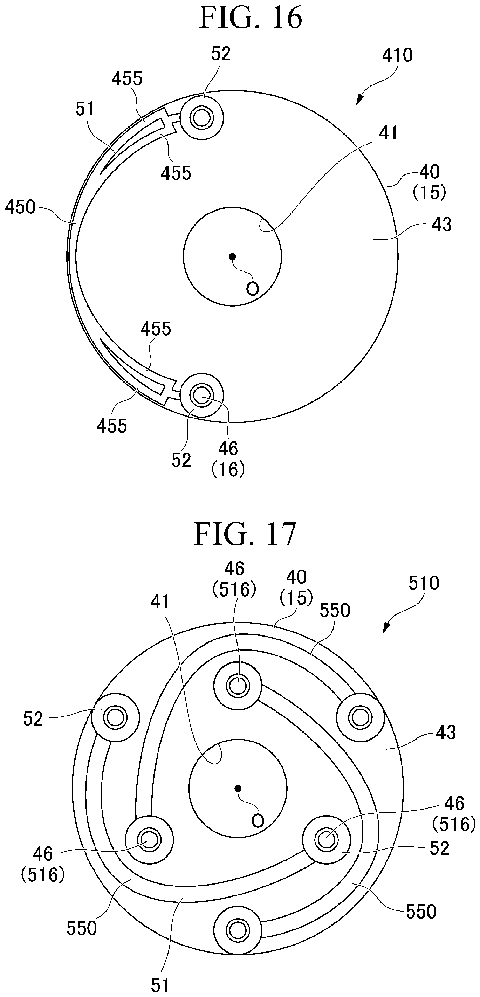

A second modification example of the fourth embodiment will be described with reference to FIG. 16.

As shown in FIG. 16, in the present modification example, one elastic body 450 is provided for one stage of a gap between the joint members 15 adjacent to each other in the axis O direction. For each elastic body 450, the plurality of beam portions 455 are arranged in a direction intersecting the axis O direction. In the present modification example, the pair of beam portions 455 are arranged with a gap in the radial direction. In addition, in the present modification example, for each elastic body 450, two sets of the pair of beam portions 455 are provided on both sides of the elastic body 450 with a circumferential central portion of the elastic body 450 interposed therebetween.

In addition, in the present modification example, the elastic body 450 has a thin portion, for example, at a circumferential center and at a location of the beam portion 455.

According to the present modification example, a portion of the elastic body 450 to which the stress is likely to be applied can be designed to be thin to reduce the rigidity. As a result, the elastic body 450 can more favorably absorb the displacement.

In the present modification example, a pair of the elastic bodies 450 may be provided to face each other in the radial direction for one stage of a gap between the joint members 15 adjacent to each other in the axis O direction.

### <Fifth Embodiment>

Hereinafter, a power transmission joint 510 according to a fifth embodiment of the present disclosure will be described with reference to FIG. 17. The same configurations as those in each of the embodiments described above are designated by the same names and the same reference signs, and descriptions thereof will be appropriately omitted.

As shown in FIG. 17, a plurality of elastic bodies 550 are provided at positions symmetrical with respect to the axis O in the gap between the joint members 15 adjacent to each other in the axis O direction. In the present embodiment, the elastic body 550 is abstractly shown in the same manner as in the first embodiment.

In the gap between the joint members 15, each elastic body 550 is provided in a spiral shape to overlap with the other elastic bodies 550 in the radial direction. The elastic body 550 is formed to be located radially inward from the joining end 52 on one side in the circumferential direction toward the joining end 52 on the other side in the circumferential direction. The elastic body 550 is joined to the motor-side joining portion 24 or the axle-side joining portion 34 at one joining end 52 and is joined to the intermediate body joining portion 46 at the other joining end 52.

In the present embodiment, three elastic bodies 550 having the same shape are provided in the gap between the joint members 15. Further, three joining portions 516 provided on the same surface of one joint member 15 are provided at positions separated by 120 degrees about the axis O. As a result, three elastic bodies 50 are provided to be shifted by 120 degrees in phase in the circumferential direction.

In the present embodiment, a plurality of the elastic bodies 550 are provided at positions symmetrical with respect to the axis O in the gap between the joint members 15 adjacent to each other in the axis O direction. In the gap between the joint members 15, each elastic body 550 is provided in a spiral shape to overlap with the other elastic bodies 550 in the radial direction.

According to the present embodiment, the elastic body 550 does not have a location where a change in curvature is large. Therefore, the power transmission joint 510 can further reduce the risk of occurrence of buckling of the elastic body 550.

In the present embodiment, three elastic bodies 550 are provided in the gap between the joint members 15, and three joining portions 516 provided on the same surface of one joint member 15 are provided at positions separated by 120 degrees about the axis O.

According to the present embodiment, three elastic bodies 550 are uniformly disposed in the circumferential direction of the axis for one stage of a gap between the joint members 15. As a result, a change in rigidity due to a rotational posture per stage is reduced. Therefore, the difference in rigidity between the stages is reduced in any rotational posture. Therefore, the power transmission joint 510 can achieve equalization of displacement sharing.

### <Modification Example of Fifth Embodiment>

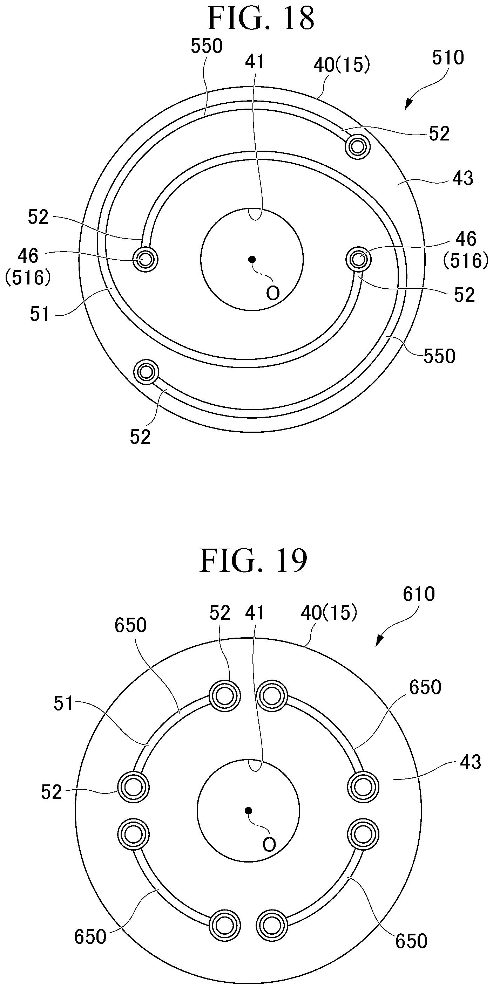

A modification example of the fifth embodiment will be described with reference to FIG. 18.

In the present modification example, two elastic bodies 550 having the same shape are provided in the gap between the joint members 15. The two elastic bodies 50 are provided at symmetrical positions such that phases in the circumferential direction are shifted by approximately 180 degrees about the axis O. Two joining portions 516 that are joined to one elastic body 550 are provided at positions separated from each other in a range of 270 degrees or more and 360 degrees or less about the axis.

According to the present modification example, two elastic bodies 550 are disposed such that major portions thereof overlap for one stage of a gap between the joint members 15. As a result, the power transmission joint 510 can reduce the displacement shared by the elastic body 550 of each stage.

### <Sixth Embodiment>

Hereinafter, a power transmission joint 610 according to a sixth embodiment of the present disclosure will be described with reference to FIG. 19. The same configurations as those in each of the embodiments described above are designated by the same names and the same reference signs, and descriptions thereof will be appropriately omitted.

As shown in FIG. 19, in the present embodiment, four elastic bodies 650 are provided at positions symmetrical with respect to the axis O in the gap between the joint members 15 adjacent to each other in the axis O direction. The four elastic bodies 650 are formed in the same shape. In the present embodiment, the elastic body 650 is abstractly shown in the same manner as in the first embodiment.

Each elastic body 650 is formed in an arc shape along the circumferential direction. The elastic body 650 is provided in a range of 80 degrees or more and 90 degrees or less about the axis O. In each stage of a gap between the joint members 15, the four elastic bodies 650 are located on the same imaginary arc centered on the axis O. Further, the four elastic bodies 650 are arranged at equal intervals with a gap in the circumferential direction.

In the present modification example, four elastic bodies 650 are provided at positions symmetrical with respect to the axis O in a gap between the joint members 15 adjacent to each other in the axis O direction. The four elastic bodies 650 are arranged at equal intervals with a gap in the circumferential direction in a gap between the joint members 15.

According to the present embodiment, the power transmission joint 610 can transmit the torque of the motor 3 by the four elastic bodies 650 for one stage of a gap between the joint members 15. As a result, in a case where the torque is relatively large, the power transmission joint 610 can reduce the stress of each elastic body 650.

### <Seventh Embodiment>

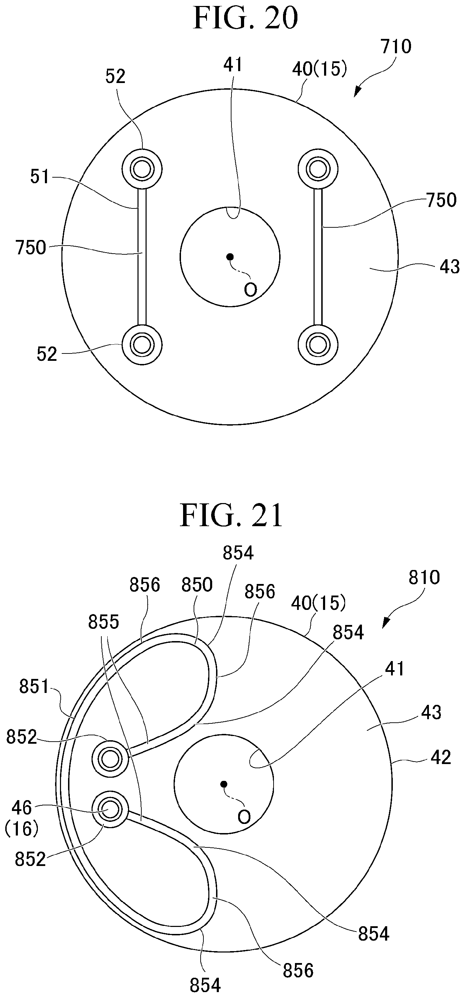

Hereinafter, a power transmission joint 710 according to a seventh embodiment of the present disclosure will be described with reference to FIG. 20. The same configurations as those in each of the embodiments described above are designated by the same names and the same reference signs, and descriptions thereof will be appropriately omitted.

As shown in FIG. 20, the elastic body 750 is formed in a linear shape intersecting the axis O direction. In the present embodiment, the elastic body 750 is abstractly shown in the same manner as in the first embodiment.

In each stage of a gap between the joint members 15 adjacent to each other in the axis O direction, a pair of the elastic bodies 750 are provided to face each other in the radial direction about the axis O. Each elastic body 750 is disposed along the joint member 15.

In the present embodiment, the elastic body 750 is formed in a linear shape intersecting the axis O direction.

In the present embodiment, a couple of forces generated at both ends of the elastic body 750 by the torque of the motor 3 are transmitted by an axial force. Therefore, in a case where the torque is relatively large, the power transmission joint 710 can efficiently transmit the couple of forces and can efficiently transmit the torque of the motor 3 to the axle.

### <Eighth Embodiment>

Hereinafter, a power transmission joint 810 according to an eighth embodiment of the present disclosure will be described with reference to FIG. 21. The same configurations as those in each of the embodiments described above are designated by the same names and the same reference signs, and descriptions thereof will be appropriately omitted.

As shown in FIG. 21, the elastic body 850 is formed in a bent shape having a plurality of bending points 854 as viewed from the axis O direction. That is, the elastic body 850 is formed by combining a plurality of straight portions 855 intersecting the axis O direction, a plurality of curved portions 856 formed to be curved as viewed from the axis O direction, and the like.

In the present embodiment, the elastic body 850 is abstractly shown in the same manner as in the first embodiment.

In the present embodiment, one elastic body 850 is provided in each stage of a gap between the joint members 15 adjacent to each other in the axis O direction. The elastic body 850 is provided in a range of 120 degrees or more and less than 180 degrees about the axis O in the circumferential direction.

The elastic body 850 is curved from an inner diameter side toward an outer diameter side of the intermediate body 40. The specific shape of the elastic body 850 is as follows.

The elastic body 850 is one member formed to be curved as viewed from the axis O direction. The elastic body 850 is bent into a curved annular shape as viewed from the axis O direction while a pair of joining ends 852 approach each other and are slightly spaced apart in the circumferential direction. More specifically, the pair of joining ends 852 are located at a circumferential center and at a radial center of the elastic body 850. The elastic main body portion 51 extends linearly in the circumferential direction from one joining end 852 and in a direction away from the other joining end 852 on the radially inner side as viewed from the axis O direction. Further, the elastic main body portion 51 extends while being curved toward the radially outer side and then extends in a direction from one joining end 52 toward the other joining end 52 along the outer peripheral surface 42 of the intermediate body 40 in the circumferential direction. The elastic main body portion 51 extends while being curved toward the radially inner side and then extends linearly toward the other joining end 52 in the circumferential direction and toward the radially outer side.

In the present embodiment, the elastic body 850 is formed in a bent shape having the plurality of bending points 854 as viewed from the axis O direction.

In the present embodiment, the elastic body 850 has a folded-back structure including the curved portion 856 having different curvatures, the straight portion 855, and the like as viewed from the axis O direction. As a result, since a length of the elastic body 850 can be made long, the rigidity of the elastic body 850 can be reduced.

In addition, in the present embodiment, the elastic body 850 has the plurality of bending points 854. As a result, the elastic body 850 can disperse locations where the stress is concentrated. Therefore, the elastic body 850 can efficiently disperse the load.

In the eighth embodiment, one elastic body 850 is provided in each stage of a gap between the joint members 15 adjacent to each other in the axis O direction, but the present disclosure is not limited to this. A pair of the elastic bodies 850 may be provided to face each other in the radial direction about the axis O.

### <First Modification Example of Eighth Embodiment>

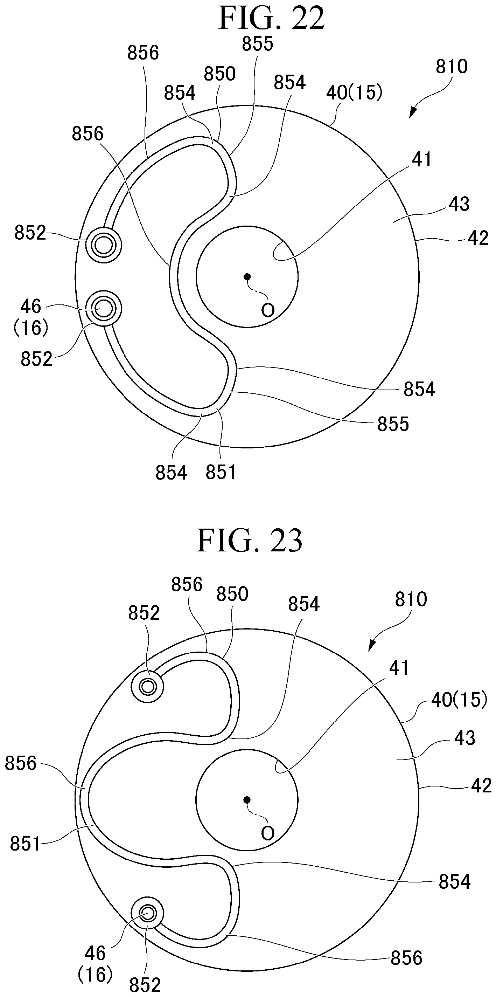

A first modification example of the eighth embodiment will be described with reference to FIG. 22.

As shown in FIG. 22, in the present modification example, the elastic body 850 is curved from an outer diameter side toward an inner diameter side of the intermediate body 40. A specific shape of the elastic body 850 is as follows.

The elastic body 850 is one member formed to be curved as viewed from the axis O direction. The elastic body 850 is bent into a curved annular shape as viewed from the axis O direction while a pair of joining ends 852 approach each other and are slightly spaced apart in the circumferential direction. More specifically, the pair of joining ends 852 are located at a circumferential center and on the radially outer side of the elastic body 850. The elastic main body portion 851 extends in a circumferential direction from one joining end 852 in a direction away from the other joining end 852 along the outer peripheral surface 42 of the intermediate body 40 as viewed from the axis O direction. Further, the elastic main body portion 851 extends linearly toward the radially inner side and then extends in a direction from one joining end 852 toward the other joining end 852 along the inner peripheral surface 41 of the intermediate body 40 in the circumferential direction. Further, the elastic main body portion 851 extends linearly toward the radially outer side and then extends toward the other joining end 852 along the outer peripheral surface 42 of the intermediate body 40 in the circumferential direction.

### <Second Modification Example of Eighth Embodiment>

A second modification example of the eighth embodiment will be described with reference to FIG. 23.

As shown in FIG. 23, in the present modification example, the elastic body 850 is formed by combining a plurality of curved portions 856 having different curvatures. The elastic body 850 is curved from an outer diameter side toward an inner diameter side of the intermediate body 40. The specific shape of the elastic body 850 is as follows.

The elastic body 850 is one member formed to be curved as viewed from the axis O direction. The elastic body 50 is formed in a wavy shape that vibrates in the radial direction as viewed from the axis O direction.

Specifically, a pair of joining ends 852 are separated from each other in the circumferential direction in a range of 90 degrees or more and less than 180 degrees about the axis O. The pair of joining ends 852 are located on both sides in the circumferential direction and on the radially outer side of the elastic body 850. The elastic main body portion 851 extends from one joining end 852 toward the inner peripheral surface 41 of the intermediate body 40 while being curved to bulge in a direction opposite to the other joining end 852 in the circumferential direction as viewed from the axis O direction. Further, the elastic main body portion 851 extends from the inner peripheral surface 41 toward the outer peripheral surface 42 of the intermediate body 40 while being curved to bulge in a direction opposite to the other joining end 852 in the circumferential direction, and reaches the outer peripheral surface 42. The elastic main body portion 851 extends from the outer peripheral surface 42 toward the inner peripheral surface 41 of the intermediate body 40 while being curved to bulge in a direction opposite to one joining end 852 in the circumferential direction. Thereafter, the elastic main body portion 851 extends from the inner peripheral surface 41 of the intermediate body 40 toward the other joining end 852 while being curved to bulge in a direction opposite to one joining end 852 in the circumferential direction.

### <Ninth Embodiment>

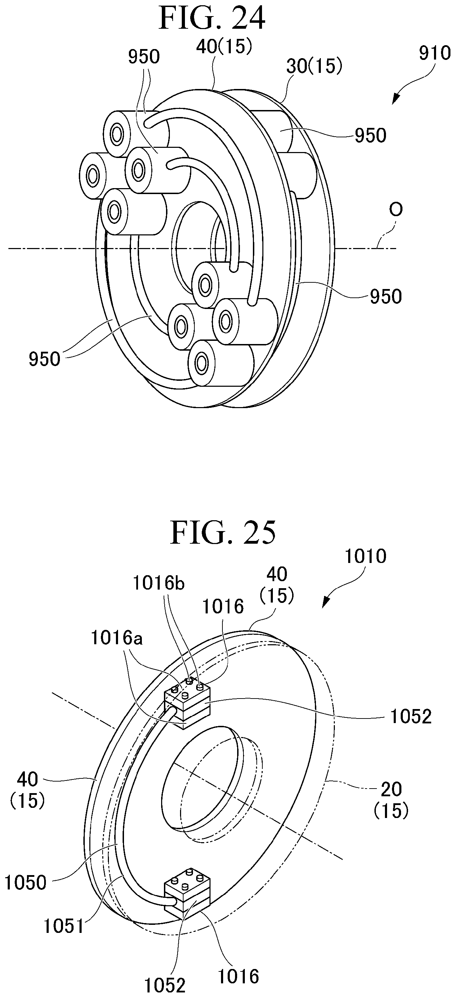

Hereinafter, a power transmission joint 910 according to a ninth embodiment of the present disclosure will be described with reference to FIG. 24. The same configurations as those in each of the embodiments described above are designated by the same names and the same reference signs, and descriptions thereof will be appropriately omitted. In FIG. 24, the motor-side joint 20 is omitted.

As shown in FIG. 24, in the power transmission joint 910, the elastic bodies 950 are provided in a plurality of rows arranged in the radial direction on the same side in the radial direction with respect to the axis O. That is, the elastic bodies 950 are provided in a plurality of stages in the radial direction. In the present embodiment, the total of four elastic bodies 950 are provided such that one pair is on each of two imaginary arcs having different diameters centered on the axis O. That is, the elastic bodies 950 are provided in two stages in the radial direction.

In addition, in the present embodiment, the elastic body 950 is abstractly shown in the same manner as in the first embodiment.

In the present embodiment, the elastic bodies 950 are provided in a plurality of rows arranged in the radial direction on the same side in the radial direction with respect to the axis O.

According to the present embodiment, the power transmission joint 910 can transmit the torque of the motor 3 by the plurality of rows of the elastic bodies 950 arranged in the radial direction. Therefore, in a case where the torque of the motor 3 is relatively large, the power transmission joint 910 can reduce the stress of each elastic body 950.

The number of stages of the elastic bodies 950 in the radial direction can be appropriately changed. The elastic bodies 950 may be provided in three or more stages in the radial direction.

### <Tenth embodiment>

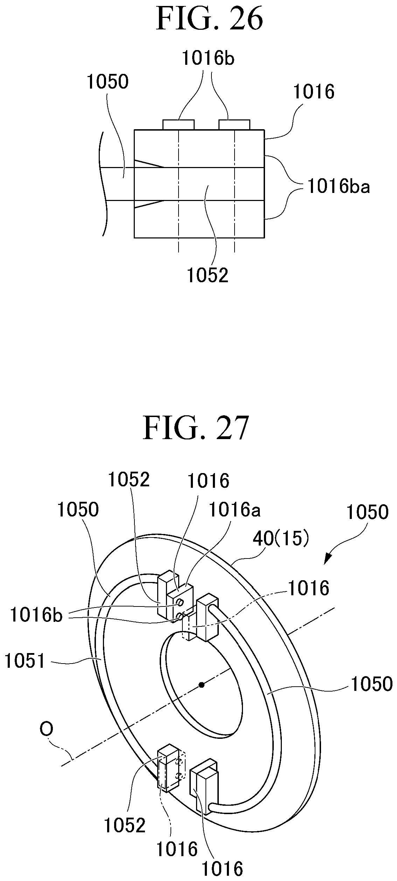

Hereinafter, a power transmission joint 1010 according to a tenth embodiment of the present disclosure will be described with reference to FIGS. 25 and 26. The same configurations as those in each of the embodiments described above are designated by the same names and the same reference signs, and descriptions thereof will be appropriately omitted.

As shown in FIGS. 25 and 26, both end portions of the elastic body 1050 are rigidly joined to a joining portion 1016. In the present embodiment, the elastic body 1050 is abstractly shown in the same manner as in the first embodiment. However, the joining end 1052 of the elastic body 1050 is formed in a rectangular plate shape.

In the present embodiment, the joining portion 1016 includes a plate portion 1016a and a bolt portion 1016b.

The plate portion 1016a is a plate-shaped member that protrudes from the joint member 15 in the axis O direction. A pair of the plate portions 1016a are provided to face each other in a direction perpendicular to the axis O direction for each of the joining portions 1016. The pair of plate portions 1016a sandwich the joining end 1052 of the elastic body 1050. An edge portion of the plate portion 1016a on a side into which the joining end 1052 is inserted is chamfered.

The bolt portion 1016b is inserted into a fastening hole (not shown) penetrating the plate portion 1016a to fasten and fix the joining end 1052 to the plate portion 1016a.

In the present embodiment, in the power transmission joint 1010, the joining end 1052 of the elastic body 1050 is rigidly joined to the joining portion 1016.

According to the present embodiment, the power transmission joint 1010 can bear a moment also at the joining portion 1016. As a result, the stress distribution of the elastic body 1050 can be equalized.

In addition, according to the present embodiment, the joining portion 1016 can be mechanical joining such as welding, bolting, or key connection. As a result, a sliding device such as a bearing required in a case where the joining portion 1016 is pin joining is not required.

### <First Modification Example of Tenth Embodiment>

A first modification example of the tenth embodiment will be described with reference to FIG. 27.

As shown in FIG. 27, in the present modification example, the elastic body 1050 includes an elastic main body portion 1051 and a joining end 1052.

The elastic main body portion 1051 is formed in an arc shape extending in the circumferential direction as viewed from the axis O direction. A pair of the joining ends 1052 extend linearly toward each other along a straight line connecting both ends of the elastic main body portion 1051. The joining end 1052 is integrally formed with the elastic main body portion 1051 and is formed to have the same width and the same plate thickness as the elastic main body portion 1051.

The plate portion 1016a abuts on the joining end 1052 in the circumferential direction. The bolt portion 1016b fastens and fixes the joining end 1052 to the plate portion 1016a from the plate portion 1016a side in the circumferential direction.

The plate portion 1016a may abut on the joining end 1052 from the radially inner side.

In addition, the plate portion 1016a may be formed in an L-shape as viewed from the axis O direction. In this case, the plate portion 1016a is fastened and fixed to the joining end 1052 in a state of abutting on the joining end 1052 from both the circumferential direction and the radially inner side.

### <Second Modification Example of Tenth Embodiment>

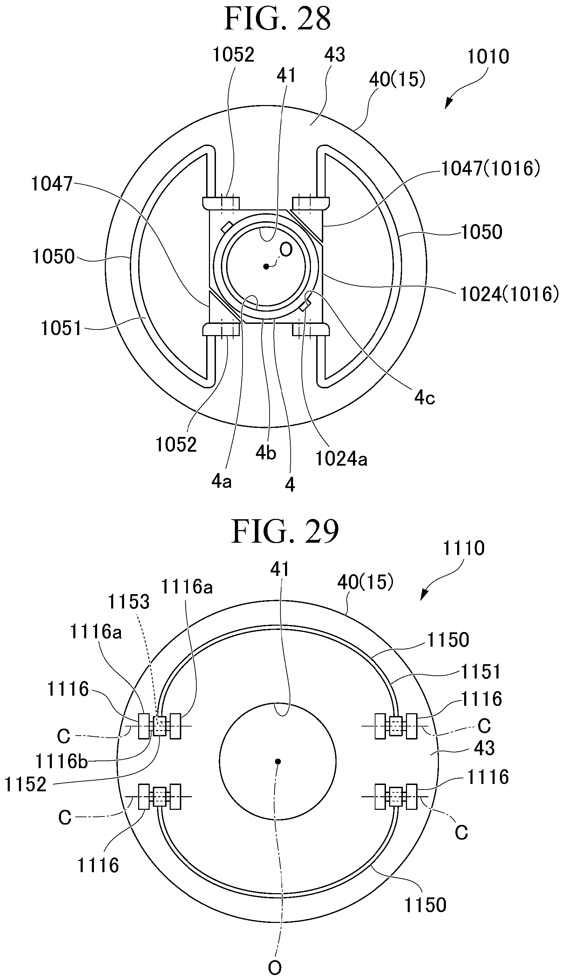

A second modification example of the tenth embodiment will be described with reference to FIG. 28. In FIG. 28, each structure is shown schematically.

As shown in FIG. 28, in the present modification example, a motor-side joining portion 1024 of the joining portion 1016 is a tubular block that is externally fitted to an end portion of the drive shaft 4. A key groove 1024a that engages with a key 4c provided on the outer peripheral surface 4b of the drive shaft 4 is formed on an inner peripheral surface of the motor-side joining portion 1024. The block of the motor-side joining portion 1024 is fixed to the drive shaft 4 by press-fitting. The key 4c and the key groove 1024a may not be provided.

The motor-side joining portion 1024 is formed in a square shape as viewed from the axis O direction with a pair of corner portions facing each other on a diagonal line cut out. One end of the elastic body 1050 is joined to each of two corner portions that are not cut out in the motor-side joining portion 1024.

In addition, a first intermediate body joining portion 1047 of the joining portion 1016 is a block-shaped member. A pair of the first intermediate body joining portions 1047 are provided to face each other in the radial direction. The pair of first intermediate body joining portions 1047 are provided one by one at positions adjacent to two corner portions of the motor-side joining portion 1024, which are cut out, on the radially outer side. The other end of the elastic body 1050 is joined to each first intermediate body joining portion 1047.

The joining between the elastic body 1050 and each joining portion 1016 is performed by fastening and fixing using a bolt, a rivet, or the like.

In the present modification example, a block shape of the motor-side joining portion 1024 and a block shape of the first intermediate body joining portion 1047 can be appropriately changed. In addition, the shape of the elastic body 1050 can also be appropriately changed.

The rigid joining between the elastic body 1050 and the joining portion 1016 has been described for a case of fastening and fixing using a bolt, a rivet, or the like, but the present disclosure is not limited to this. The rigid joining between the elastic body 1050 and the joining portion 1016 may be performed by other methods, for example, welding.

### <Eleventh embodiment>

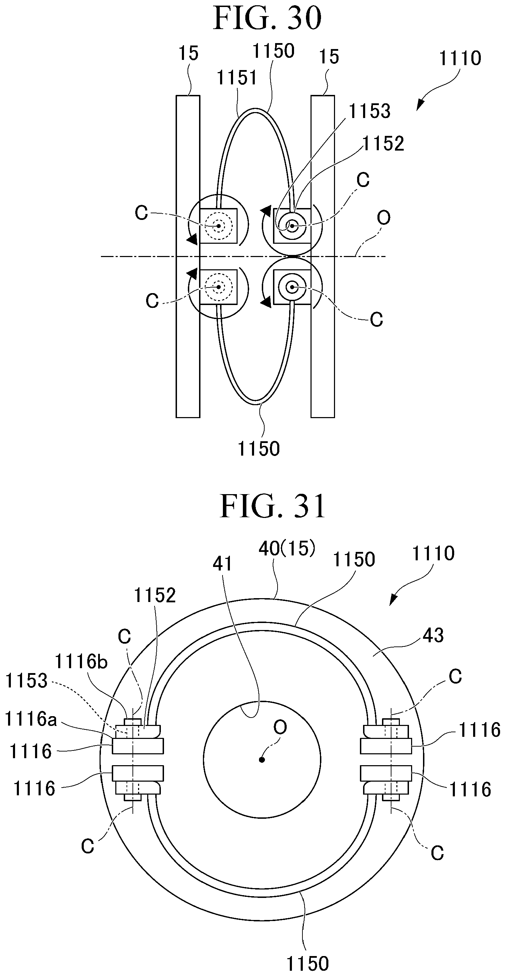

Hereinafter, a power transmission joint 1110 according to a eleventh embodiment of the present disclosure will be described with reference to FIGS. 29 and 30. The same configurations as those in each of the embodiments described above are designated by the same names and the same reference signs, and descriptions thereof will be appropriately omitted.

As shown in FIGS. 29 and 30, both end portions of an elastic body 1150 are joined to each other to be rotatable around a joining portion axis C passing through a joining portion 1116 and extending in a direction perpendicular to the axis O direction.

In the present embodiment, the elastic body 1150 is abstractly shown in the same manner as in the first embodiment.

In the present embodiment, the elastic body 1150 includes an elastic main body portion 1151 and a joining end 1152. A joining hole 1153 is provided in the joining end 1152. The joining hole 1153 according to the present embodiment penetrates the joining end 1152 in a plate thickness direction.

The joining portion 1116 includes a plate portion 1116a and a shaft portion 1116b.

The plate portion 1116a is a plate-shaped member that protrudes from the joint member 15 in the axis O direction. A pair of the plate portions 1116a are provided to face each other in a direction of a straight line connecting the pair of the joining ends 1152 for each of the joining portions 1016. The pair of plate portions 1116a sandwich the joining end 1152 of the elastic body 1150.

The shaft portion 1116b is provided between the pair of plate portions 1116a and connects the pair of plate portions 1116a to each other. The shaft portion 1116b extends in a direction of a straight line connecting the pair of joining ends 1152. The shaft portion 1116b is inserted into the joining hole 1153 of the joining end 1152.

Both end portions of the elastic body 1150 are joined to be rotatable around the shaft portion 1116b of the joining portion 1116. That is, in the present embodiment, the joining portion axis C extends in a direction of a straight line connecting the pair of joining ends 1152 along a center line of the joining portion 1116.

In the present embodiment, both end portions of the elastic body 1150 are joined to be rotatable around the joining portion axis C passing through the joining portion 1116.

According to the present embodiment, the elastic body 1150 rotates around the joining portion axis C. As a result, the power transmission joint 1010 can relieve the displacement in the axis O direction.

### <Modification Example of Eleventh Embodiment>

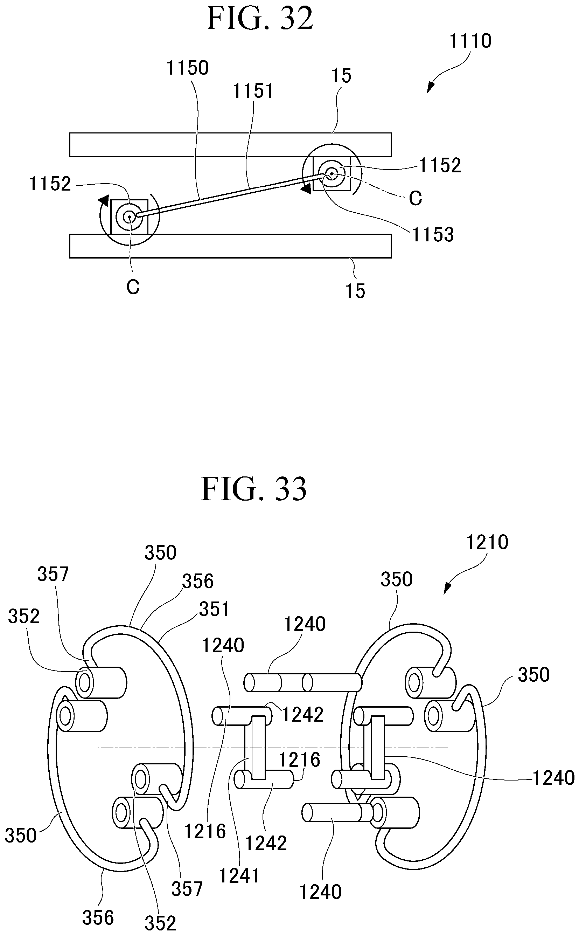

A modification example of the eleventh embodiment will be described with reference to FIGS. 31 and 32.

As shown in FIGS. 30 and 31, in the present modification example, the joining end 1152 is provided at both ends of the elastic main body portion 1151. In the present modification example, the joining end 1152 extends in a direction separated from the other joining end 1152 in a direction of a straight line connecting a pair of the joining ends 1152.

In the present modification example, one plate portion 1116a is provided in each joining portion 1116. The plate portion 1116a is superimposed on the joining end 1152 from the circumferential direction.

The shaft portion 1116b protrudes from the plate portion 1116a in a direction perpendicular to the axis O direction and in a direction perpendicular to the direction of the straight line connecting the pair of joining ends 1152. The shaft portion 1116b is inserted into the joining hole 1153 of the joining end 1152.

Both end portions of the elastic body 1150 are joined to be rotatable around the shaft portion 1116b of the joining portion 1116. That is, in the present modification example, the joining portion axis C extends along the center line of the joining portion 1116 in a direction perpendicular to the axis O line and in a direction perpendicular to the direction of the straight line connecting the pair of joining ends 1152.

The elastic body 1150 and the joining portion 1116 may be joined to each other to be rotatable around the joining portion axis C by, for example, a hinge or a spherical seat.

In the eleventh embodiment, both end portions of the elastic body 1150 are joined to be rotatable around the joining portion axis C, but the present disclosure is not limited to this. Only one of both end portions of the elastic body 1150 may be joined to be rotatable around the joining portion axis C.

### <Twelfth Embodiment>

Hereinafter, a power transmission joint 1210 according to a twelfth embodiment of the present disclosure will be described with reference to FIG. 33. The same configurations as those in each of the embodiments described above are designated by the same names and the same reference signs, and descriptions thereof will be appropriately omitted.

As shown in FIG. 33, in the present embodiment, the power transmission joint 1210 includes the elastic body 350 described with reference to FIG. 11 above. That is, the elastic body 350 according to the present embodiment includes the elastic main body portion 351 and the joining end 352, and the elastic main body portion 351 includes the curved portion 356 and the straight portion 357.

In the present embodiment, the elastic body 350 is abstractly shown in the same manner as in the first embodiment.

An intermediate body 1240 is formed in a multi-stage pin shape having a first rod-shaped portion 1241 and a second rod-shaped portion 1242.

The first rod-shaped portion 1241 extends in a direction intersecting the axis O direction.

A pair of the second rod-shaped portions 1242 are provided on both sides of the first rod-shaped portion 1241 in the axis O direction. Each second rod-shaped portion 1242 is connected to both end portions of the first rod-shaped portion 1241 and extends in the axis O direction.

A joining portion 1216 is provided at an end portion of the second rod-shaped portion 1242 on a side opposite to the first rod-shaped portion 1241.

A pair of the first rod-shaped portion 1241 are provided in a gap between the elastic bodies 350 adjacent to each other in the axis O direction. The pair of first rod-shaped portions 1241 are connected to both end portions (joining ends 352) of separate elastic bodies 350.

In the present embodiment, the intermediate body 1240 is formed in a multi-stage pin shape having the first rod-shaped portion 1241 and the second rod-shaped portion 1242.

According to the present embodiment, the intermediate body 1240 can be designed with a minimum required size for transmitting the torque of the motor 3. As a result, the power transmission joint 1210 can be made lighter.

### (Other Embodiments)

The embodiments of the present disclosure have been described above in detail with reference to the drawings. However, specific configurations are not limited to the embodiments, and include a design modification or the like within a scope which does not depart from the gist of the present disclosure.

In the embodiments described above, the drive shaft 4 is a hollow shaft, but the present disclosure is not limited to this. The drive shaft 4 may be a solid shaft formed in a circular columnar shape, for example. In this case, the entire axle (driven shaft) 6 is disposed at a position spaced apart from the drive axle 4 in the axis O direction.

In the embodiments described above, a case where the bogie 1 is a bogie for a railway vehicle has been described, but the present disclosure is not limited to this. The bogie 1 may be used, for example, in a forklift or an electric assist bogie that is manually pushed by a person to transport a heavy object. Furthermore, the power transmission joints 10, 210, 310, 410, 510, 610, 710, 810, 910, 1010, 1110, and 1210 may be used for devices other than the bogie.

### < Appendix >

The power transmission joint described in each embodiment is understood, for example, as follows.

(1) The power transmission joint 10, 210, 310, 410, 510, 610, 710, 810, 910, 1010, 1110, or 1210 according to a first aspect is the power transmission joint 10, 210, 310, 410, 510, 610, 710, 810, 910, 1010, 1110, or 1210 that connects the drive shaft 4 configured to rotate by receiving driving of the motor 3 including the rotor 3a and the driven shaft that is at least partially disposed at a position separated from the drive shaft 4 in the axis O direction of the drive shaft 4, the power transmission joint including: the joint members 15 arranged in the axis O direction; the plurality of elastic bodies 50, 350, 450, 550, 650, 750, 850, 950, 1050, or 1150 having a plate shape that are provided between the joint members 15 adjacent to each other in the axis O direction to connect the joint members 15 adjacent to each other in the axis O direction and that are configured to extend in a direction intersecting the axis O direction; and the plurality of joining portions 16, 516, 1016, 1116, or 1216 provided in a state of being fixed to each joint member 15 and configured to be joined to both end portions of the elastic body 50, 350, 450, 550, 650, 750, 850, 950, 1050, or 1150, in which the joint members 15 include the motor-side joint 20 configured to be fixed to the drive shaft 4, the driven shaft-side joint provided on a side opposite to the motor 3 in the axis O direction with the motor-side joint 20 interposed therebetween and configured to be fixed to the outer peripheral surface of the driven shaft, and the intermediate body 40, 240, or 1240 provided between the motor-side joint 20 and the driven shaft-side joint.

An example of the driven shaft is the axle 6.

An example of the driven shaft-side joint is the axle-side joint 30.

According to the present aspect, the intermediate body 40, 240, and 1240 is disposed between the elastic bodies 50, 350, 450, 550, 650, 750, 850, 950, 1050, or 1150. Therefore, the plurality of elastic bodies 50, 350, 450, 550, 650, 750, 850, 950, 1050, or 1150 can be arranged in series in the axis O direction.

In addition, since the plurality of elastic bodies 50, 350, 450, 550, 650, 750, 850, 950, 1050, or 1150 are arranged in series in the axis O direction, each of the elastic bodies 50, 350, 450, 550, 650, 750, 850, 950, 1050, or 1150 can be set to any shape.

(2) The power transmission joint 210 according to a second aspect is the power transmission joint 210 according to the first aspect, in which the slit 241 may be formed in the intermediate body 240.

According to the present aspect, the rigidity of the intermediate body 240 can be reduced.

(3) The power transmission joint 310 according to a third aspect is the power transmission joint 310 according to the first or second aspect, in which two or more intermediate bodies 40 may be provided side by side in the axis O direction, and the elastic bodies 350 may be provided at three or more stages side by side in the axis O direction.

According to the present aspect, the displacement shared by each elastic body 350 is reduced. As a result, the rigidity of the power transmission joint 310 as a whole is further reduced. That is, the reactive force of the power transmission joint 310 as a whole is reduced.

(4) The power transmission joint 10 according to a fourth aspect is the power transmission joint 10 according to any one of the first to third aspects, in which at least one of both end portions of the elastic body 50 may be semi-rigidly joined to the joining portion 16 or may be joined to be rotatable around an axis passing through the joining portion 16 and parallel to the axis O.

The rigidity of the elastic body 50 is evaluated as a rigidity of a series spring of the elastic body 50 alone and the joining portion 16, rather than the rigidity of the elastic body 50 alone. According to the present aspect, by making the joining portion 16 undergo semi-rigid joining which is flexible as compared with rigid joining or undergo rotatable joining, the elastic body 50 and the joining portion 16 are softer than the elastic body 50 alone as the series spring.

(5) The power transmission joint 1010 according to a fifth aspect is the power transmission joint 1010 according to any one of the first to third aspects, in which both end portions of the elastic body 1050 may be rigidly joined to the joining portion 1016.

According to the present aspect, the power transmission joint 1010 can bear a moment also at the joining portion 1016.

In addition, according to the present aspect, the joining portion 1016 can be mechanical joining such as welding, bolting, or key connection.

(6) The power transmission joint 1110 according to a sixth aspect is the power transmission joint 1110 according to any one of the first to third aspects, in which at least one of both end portions of the elastic body 1150 may be joined to be rotatable around the joining portion axis C passing through the joining portion 1116 and extending in a direction perpendicular to the axis O direction.

According to the present aspect, the elastic body 1150 rotates around the joining portion axis C.

(7) The power transmission joint 10 according to a seventh aspect is the power transmission joint 10 according to any one of the first to sixth aspects, in which the elastic bodies 50 adjacent to each other in the axis O direction may be disposed by being rotated about the axis O such that phases thereof are different from each other.

According to the present aspect, it is possible to suppress variation of the rigidity depending on a rotational position with respect to the rigidity against the displacement in a direction perpendicular to the axis direction of the power transmission joint 10 (in-plane displacement).

(8) The power transmission joint 10 according to an eighth aspect is the power transmission joint 10 according to the seventh aspect, in which the elastic bodies 50 adjacent to each other in the axis O direction may be disposed by being rotated about the axis O in a range of 85 degrees or more and 95 degrees or less such that the phases thereof are different from each other.

According to the present aspect, the rigidity against the displacement in the direction perpendicular to the axis direction of the power transmission joint 10 (in-plane displacement) is the same regardless of the rotational position.

(9) The power transmission joint 410 according to a ninth aspect is the power transmission joint 410 according to any one of the first to eighth aspects, in which the elastic body 450 may have the plurality of beam portions 455 that are disposed in parallel to each other at intervals.

According to the present aspect, since the deformation occurs in each of the beam portions 455, the rigidity of the elastic body 450 is reduced.

(10) The power transmission joint 410 according to a tenth aspect is the power transmission joint 410 according to the ninth aspect, in which the plurality of beam portions 455 may be arranged in the axis O direction.

According to the present aspect, the rigidity of the elastic body 450 in the axis O direction is reduced.

(11) The power transmission joint 410 according to an eleventh aspect is the power transmission joint 410 according to the ninth aspect, in which the plurality of beam portions 455 may be arranged in a direction intersecting the axis O direction.

According to the present aspect, the rigidity of the elastic body 450 in the direction intersecting the axis O direction is reduced.

(12) The power transmission joint 710 according to a twelfth aspect is the power transmission joint 710 according to any one of the first to eleventh aspects, in which the elastic body 750 may be formed in a linear shape intersecting the axis O direction.

In the present aspect, a couple of forces generated at both ends of the elastic body 750 by the torque of the motor 3 are transmitted by an axial force.

(13) The power transmission joint 810 according to a thirteenth aspect is the power transmission joint 810 according to any one of the first to eleventh aspects, in which the elastic body 850 may be formed in a bent shape having the plurality of bending points 854 as viewed from the axis O direction.

In the present aspect, the elastic body 850 has a folded-back structure formed including the curved portion 856 having different curvatures, the straight portion 855, and the like as viewed from the axis O direction.

In addition, in the present aspect, the elastic body 850 has the plurality of bending points 854. As a result, the elastic body 850 can disperse locations where the stress is concentrated.

(14) The power transmission joint 10, 510, or 610 according to a fourteenth aspect is the power transmission joint 10, 510, or 610 according to any one of the first to eleventh aspects, in which the elastic body 50, 550, or 650 may be formed to be curved as viewed from the axis O direction.

According to the present aspect, the couple of forces F2 generated at both ends of the elastic bodies 50, 550, or 650 by the torque of the motor 3 is transmitted by bending of the elastic body 50, 550, or 650. Further, the length of the elastic body 50, 550, or 650 is longer than that in a case where the elastic body 50, 550, or 650 is formed in a linear shape.

(15) The power transmission joint 10 according to a fifteenth aspect is the power transmission joint 10 according to the fourteenth aspect, in which the elastic body 50 may be formed in an arc shape extending in the circumferential direction of the axis O.

According to the present aspect, the curvature is equal at each point of the elastic body 50.

(16) The power transmission joint 510 according to a sixteenth aspect is the power transmission joint 510 according to the fourteenth aspect, in which a plurality of the elastic bodies 550 may be provided at positions symmetrical with respect to the axis O in a gap between the joint members 15 adjacent to each other in the axis O direction, and in the gap between the joint members 15, each of the elastic bodies 550 may be provided in a spiral shape to overlap with other elastic bodies 550 in the radial direction.

According to the present aspect, the elastic body 550 does not have a location where a change in curvature is large.

(17) The power transmission joint 510 according to a seventeenth aspect is the power transmission joint 510 according to the sixteenth aspect, in which three elastic bodies 550 may be provided in the gap between the joint members 15, and three joining portions 516 provided on the same surface of one joint member 15 may be provided at positions separated from each other by 120 degrees about the axis O.

According to the present aspect, the three elastic bodies 550 are uniformly disposed in the circumferential direction of the axis O for one stage of a gap between the joint members 15. As a result, a change in rigidity due to a rotational posture per stage is reduced. Therefore, a difference in rigidity between the stages is reduced in any rotational posture.

(18) The power transmission joint 510 according to an eighteenth aspect is the power transmission joint 510 according to the sixteenth aspect, in which two elastic bodies 550 may be provided in the gap between the joint members 15, and two joining portions 516 that are joined to one elastic body 550 may be provided at positions separated from each other in a range of 270 degrees or more and 360 degrees or less about the axis O.

According to the present aspect, two elastic bodies 550 are disposed such that major portions thereof overlap for one stage of a gap between the joint members 15.

(19) The power transmission joint 610 according to a nineteenth aspect is the power transmission joint 610 according to the fourteenth aspect, in which four elastic bodies 650 may be provided at positions that are symmetrical with respect to the axis O in a gap between the joint members 15 adjacent to each other in the axis O direction, and in the gap between the joint members 15, the four elastic bodies 650 may be disposed at equal intervals with a gap therebetween in a circumferential direction of the axis O.

According to the present aspect, the power transmission joint 610 can transmit the torque of the motor 3 by the four elastic bodies 650 for one stage of a gap between the joint members 15.

(20) The power transmission joint 10 according to a twentieth aspect is the power transmission joint 10 according to any one of the first to fifteenth aspects, in which the plurality of joining portions 16 may include the motor-side joining portion 24 provided in the motor-side joint 20, the driven shaft-side joining portion provided in the driven shaft-side joint, and the intermediate body joining portion 46 provided in the intermediate body 40 and including the first intermediate body joining portion 47 on the motor 3 side and the second intermediate body joining portion 48 on a side opposite to the motor 3 in the axis direction, the motor-side joining portion 24 may be provided in a pair of sets with the same phase to be adjacent to each other in a circumferential direction of the axis O, the driven shaft-side joining portion may be provided in a pair of sets with the same phase to be adjacent to each other in the circumferential direction of the axis O, the first intermediate body joining portion 47 may be provided in a pair of sets with the same phase to be adjacent to each other in the circumferential direction of the axis O, and the second intermediate body joining portion 48 may be provided in a pair of sets with the same phase to be adjacent to each other in the circumferential direction of the axis O.

An example of the driven shaft-side joining portion is the axle-side joining portion 34.

According to the present aspect, in a case where a force in the axis O direction acts on the power transmission joint 10, the intermediate body 40 is rigidly tilted.

(21) The power transmission joint 910 according to a twenty-first aspect is the power transmission joint 910 according to any one of the first to twentieth aspects, in which the elastic body 950 may be provided in a plurality of rows arranged in the radial direction of the axis O on the same side in the radial direction of the axis O with respect to the axis O.

According to the present aspect, the power transmission joint 910 can transmit the torque of the motor 3 by the plurality of rows of the elastic bodies 950 arranged in the radial direction.

(22) The power transmission joint 410 according to a twenty-second aspect is the power transmission joint 410 according to any one of the first to twenty-first aspects, in which the elastic body 450 may have a thin portion.

According to the present aspect, a portion of the elastic body 450 to which the stress is likely to be applied can be designed to be thin to reduce the rigidity.

(23) The power transmission joint 1210 according to a twenty-third aspect is the power transmission joint 1210 according to any one of the first to twenty-second aspects, in which the intermediate body 1240 may be formed in a multi-stage pin shape including the first rod-shaped portion 1241 that extends in a direction intersecting the axis O direction and the second rod-shaped portion 1242 that is connected to both end portions of the first rod-shaped portion 1241 and that extends in the axis O direction, and the joining portion 1216 may be provided at an end portion of the second rod-shaped portion 1242 on a side opposite to the first rod-shaped portion 1241.

According to the present aspect, the intermediate body 1240 can be designed with the minimum required size for transmitting the torque of the motor 3.

### [Industrial Applicability]

With the power transmission joint of the present disclosure, the torque of the motor can be favorably transmitted to the driven shaft while favorably absorbing the displacement of the driven shaft.

### [Reference Signs List]

1: Bogie
2: Bogie frame
2a: Bottom portion
3: Motor
3a: Rotor
4: Drive shaft
4a: Inner peripheral surface
4b: Outer peripheral surface
4c: Key
5: Motor suspension portion
6: Axle (driven shaft)
6a: Outer peripheral surface
7: Wheel
8: Axle spring
10: Power transmission joint
11: Rubber bush
15: Joint member
16: Joining portion
20: Motor-side joint
23: Side surface
24: Motor-side joining portion
30: Axle-side joint (driven shaft-side joint)
33: Side surface
34: Axle-side joining portion (driven shaft-side joining portion)
40: Intermediate body
41: Inner peripheral surface
42: Outer peripheral surface
43: Side surface
44: First side surface
45: Second side surface
46: Intermediate body joining portion
47: First intermediate body joining portion
48: Second intermediate body joining portion
50: Elastic body
50a: Motor-side elastic body
50b: Axle-side elastic body
51: Elastic main body portion
51a: Motor-side elastic main body portion
51b: Axle-side elastic main body portion
52: Joining end
52a: Motor-side joining end
52b: Axle-side joining end
53: Joining hole
53a: Motor-side joining hole
53b: Axle-side joining hole
210: Power transmission joint
240: Intermediate body
241: Slit
310: Power transmission joint
350: Elastic body
350a: Motor-side elastic body
350b: Axle-side elastic body
350c: Intermediate elastic body
351: Elastic main body portion
352: Joining end
356: Curved portion
357: Straight portion
410: Power transmission joint
450: Elastic body
450a: Motor-side elastic body
450b: Axle-side elastic body
455: Beam portion
510: Power transmission joint
516: Joining portion
550: Elastic body
610: Power transmission joint
650: Elastic body
710: Power transmission joint
750: Elastic body
810: Power transmission joint
850: Elastic body
851: Elastic main body portion
852: Joining end
854: Bending point
855: Straight portion
856: Curved portion
910: Power transmission joint
950: Elastic body
1010: Power transmission joint
1016: Joining portion
1016a: Plate portion
1016b: Bolt portion
1024: Motor-side joining portion
1024a: Key groove
1047: First intermediate body joining portion
1050: Elastic body
1051: Elastic main body portion
1052: Joining end
1110: Power transmission joint
1116: Joining portion
1116a: Plate portion
1116b: Shaft portion
1150: Elastic body
1151: Elastic main body portion
1152: Joining end
1153: Joining hole
1210: Power transmission joint
1216: Joining portion
1240: Intermediate body
1241: First rod-shaped portion
1242: Second rod-shaped portion
C: Joining portion axis
F1: (Circumferential) force
F2: Couple of forces
L: Rail
O: Axis
S: Torque direction cross section

## Claims

1. A power transmission joint that connects a drive shaft configured to rotate by receiving driving of a motor including a rotor and a driven shaft that is at least partially disposed at a position separated from the drive shaft in an axis direction of the drive shaft, the power transmission joint comprising:
joint members arranged in the axis direction;
a plurality of elastic bodies having a plate shape that are provided between the joint members adjacent to each other in the axis direction to connect the joint members adjacent to each other in the axis direction and that are configured to extend in a direction intersecting the axis direction; and
a plurality of joining portions provided in a state of being fixed to each joint member and configured to be joined to both end portions of the elastic body,
wherein the joint members include
a motor-side joint configured to be fixed to the drive shaft,
a driven shaft-side joint provided on a side opposite to the motor in the axis direction with the motor-side joint interposed therebetween and configured to be fixed to an outer peripheral surface of the driven shaft, and
an intermediate body provided between the motor-side joint and the driven shaft-side joint.

2. The power transmission joint according to Claim 1,
wherein a slit is formed in the intermediate body.

3. The power transmission joint according to Claim 1 or 2,
wherein two or more intermediate bodies are provided side by side in the axis direction, and
the elastic bodies are provided at three or more stages side by side in the axis direction.

4. The power transmission joint according to Claim 1 or 2,
wherein at least one of both end portions of the elastic body is semi-rigidly joined to the joining portion or is joined to be rotatable around an axis passing through the joining portion and parallel to the axis.

5. The power transmission joint according to Claim 1 or 2,
wherein both end portions of the elastic body are rigidly joined to the joining portion.

6. The power transmission joint according to Claim 1 or 2,
wherein at least one of both end portions of the elastic body is joined to be rotatable around a joining portion axis passing through the joining portion and extending in a direction perpendicular to the axis direction.

7. The power transmission joint according to Claim 1 or 2,
wherein the elastic bodies adjacent to each other in the axis direction are disposed by being rotated about the axis such that phases thereof are different from each other.

8. The power transmission joint according to Claim 7,
wherein the elastic bodies adjacent to each other in the axis direction are disposed by being rotated about the axis in a range of 85 degrees or more and 95 degrees or less such that the phases thereof are different from each other.

9. The power transmission joint according to Claim 1 or 2,
wherein the elastic body has a plurality of beam portions that are disposed in parallel to each other at intervals.

10. The power transmission joint according to Claim 9,
wherein the plurality of beam portions are arranged in the axis direction.

11. The power transmission joint according to Claim 9,
wherein the plurality of beam portions are arranged in a direction intersecting the axis direction.

12. The power transmission joint according to Claim 1 or 2,
wherein the elastic body is formed in a linear shape intersecting the axis direction.

13. The power transmission joint according to Claim 1 or 2,
wherein the elastic body is formed in a bent shape having a plurality of bending points as viewed from the axis direction.

14. The power transmission joint according to Claim 1 or 2,
wherein the elastic body is formed to be curved as viewed from the axis direction.

15. The power transmission joint according to Claim 14,
wherein the elastic body is formed in an arc shape extending in a circumferential direction of the axis.

16. The power transmission joint according to Claim 14,
wherein a plurality of the elastic bodies are provided at positions that are symmetrical with respect to the axis in a gap between the joint members adjacent to each other in the axis direction, and
in the gap between the joint members, each of the elastic bodies is provided in a spiral shape to overlap with other elastic bodies in a radial direction.

17. The power transmission joint according to Claim 16,
wherein three elastic bodies are provided in the gap between the two joint members, and
three joining portions provided on the same surface of one joint member are provided at positions separated from each other by 120 degrees about the axis.

18. The power transmission joint according to Claim 16,
wherein two elastic bodies are provided in the gap between the joint members, and
two joining portions that are joined to one elastic body are provided at positions separated from each other in a range of 270 degrees or more and 360 degrees or less about the axis.

19. The power transmission joint according to Claim 14,
wherein four elastic bodies are provided at positions that are symmetrical with respect to the axis in a gap between the joint members adjacent to each other in the axis direction, and
in the gap between the joint members, the four elastic bodies are disposed at equal intervals with a gap therebetween in a circumferential direction of the axis.

20. The power transmission joint according to Claim 1 or 2,
wherein the plurality of joining portions include
a motor-side joining portion provided in the motor-side joint,
a driven shaft-side joining portion provided in the driven shaft-side joint, and
an intermediate body joining portion provided in the intermediate body and including a first intermediate body joining portion on a motor side and a second intermediate body joining portion on a side opposite to the motor in the axis direction,
the motor-side joining portion is provided in a pair of sets with the same phase to be adjacent to each other in a circumferential direction of the axis,
the driven shaft-side joining portion is provided in a pair of sets with the same phase to be adjacent to each other in the circumferential direction of the axis,
the first intermediate body joining portion is provided in a pair of sets with the same phase to be adjacent to each other in the circumferential direction of the axis, and
the second intermediate body joining portion is provided in a pair of sets with the same phase to be adjacent to each other in the circumferential direction of the axis.

21. The power transmission joint according to Claim 1 or 2,
wherein the elastic body is provided in a plurality of rows arranged in a radial direction of the axis on the same side in the radial direction of the axis with respect to the axis.

22. The power transmission joint according to Claim 1 or 2,
wherein the elastic body has a thin portion.

23. The power transmission joint according to Claim 1 or 2,
wherein the intermediate body is formed in a multi-stage pin shape including a first rod-shaped portion that extends in a direction intersecting the axis direction and a second rod-shaped portion that is connected to both end portions of the first rod-shaped portion and that extends in the axis direction, and
the joining portion is provided at an end portion of the second rod-shaped portion on a side opposite to the first rod-shaped portion.
